# EUROPEAN PATENT APPLICATION

(11) **EP 4 593 400 A1**
(43) Date of publication of application: **30.07.2025**
(21) Application number: 23893298.2
(22) Date of filing: 21.08.2023
(51) Int. Cl.: H04N 21/4402, H04N 21/44, H04M 1/72439

(54) **METHOD FOR ENHANCING VIDEO IMAGE QUALITY AND ELECTRONIC DEVICE**

(30) Priority: 22.11.2022 CN 202211468041
(71) Applicant: Honor Device Co., Ltd., Shenzhen, Guangdong 518040 (CN)
(72) Inventor: JIANG, Weishuai, Shenzhen, Guangdong 518040 (CN); BU, Yanyun, Shenzhen, Guangdong 518040 (CN); LEI, Caihua, Shenzhen, Guangdong 518040 (CN)
(74) Representative: Goddar, Heinz J.
(86) International application number: PCT/CN2023/114086
(87) International publication number: WO 2024/109202

(57) **Abstract**

This application relates to the field of image processing, and provides a method for enhancing video image quality and an electronic device. The method is applied to an electronic device for playing a video, and includes: obtaining a to-be-played video; displaying a first display interface, where the first display interface includes the to-be-played video; detecting a play operation on the to-be-played video; determining, in response to the play operation, whether a first parameter of the to-be-played video is less than a first preset threshold; determining, if the first parameter is less than the first preset threshold, whether a second parameter of the to-be-played video satisfies a first preset condition; performing enhancement processing on the to-be-played video based on the first parameter and/or the second parameter, to generate an enhanced video; and displaying or saving the enhanced video. Based on the solution of this application, a reason why video quality of the to-be-played video is poor can be intelligently analyzed, and image quality enhancement processing is performed on the to-be-played video in a targeted manner, to improve the video quality of the to-be-played video.

## Description

This application claims priority to Chinese Patent Application No. 202211468041.4, filed with the China National Intellectual Property Administration on November 22, 2022 and entitled "METHOD FOR ENHANCING VIDEO IMAGE QUALITY AND ELECTRONIC DEVICE", which is incorporated herein by reference in its entirety.

### TECHNICAL FIELD

This application relates to the field of image processing, and in particular, to a method for enhancing video image quality and an electronic device.

### BACKGROUND

With the popularization of electronic devices and wireless networks, video application programs are used more widely. Usually, a user may capture a video by using an electronic device and upload the video to a video application program for video sharing. Currently, because the electronic device for capturing a video has a poor processing capability; or the user has poor shooting skills in capturing videos; or due to factors such as a poor network transmission environment of the video, video quality of the video played on the electronic device is poor, and the user has a poor video watching experience.

Therefore, how to perform enhancement processing on video image quality of a to-be-played video, to improve video quality becomes an urgent problem that needs to be resolved.

### SUMMARY

This application provides a method for enhancing video image quality and an electronic device, which can intelligently analyze a reason why video quality of a to-be-played video is poor, to perform image quality enhancement processing on the to-be-played video in a targeted manner, thereby improving the video quality of the to-be-played video.

According to a first aspect, a method for enhancing video image quality is provided, which is applied to an electronic device and includes:
obtaining a to-be-played video;
displaying a first display interface, where the first display interface includes the to-be-played video;
detecting a play operation on the to-be-played video;
determining, in response to the play operation, whether a first parameter of the to-be-played video is less than a first preset threshold, where the first parameter includes a resolution;
determining, if the first parameter is less than the first preset threshold, whether a second parameter of the to-be-played video satisfies a first preset condition, where the second parameter includes a value of a dynamic range and a value of high-frequency information, the first preset condition includes that the value of the dynamic range of the to-be-played video is less than a second preset threshold, and/or the value of the high-frequency information of the to-be-played video is than a third preset threshold, the value of the high-frequency information is an accumulated value of high-frequency information in a frequency domain diagram of the to-be-played video, and the high-frequency information includes edge information and detail information of an image in the to-be-played video;
performing enhancement processing on the to-be-played video based on the first parameter and/or the second parameter, to generate an enhanced video; and
displaying or saving the enhanced video.

Based on the solution of this application, the to-be-played video is obtained; the first display interface is displayed, where the first display interface includes the to-be-played video and a first control, and the first control is used to indicate to perform enhancement processing on the to-be-played video; a play operation on the first control is detected; it is determined first whether the first parameter of the to-be-played video is less than the first preset threshold, where the first parameter includes a resolution; if the first parameter is less than the first preset threshold, it is determined whether the second parameter of the to-be-played video satisfies the first preset condition; enhancement processing is performed on the to-be-played video based on the first parameter and/or the second parameter, to generate an enhanced video; and the enhanced video is displayed or saved. It can be understood as: in this embodiment of this application, before image quality enhancement processing is performed on the to-be-played video, the to-be-played video may be analyzed first, to determine a factor that affects the video quality of the to-be-played video. When the factor that affects the video quality of the to-be-played video is determined, image quality enhancement processing is performed on the to-be-played video in a targeted manner, to improve the video quality of the to-be-played video. Compared with an existing manner in which enhancement processing is directly performed on one aspect of the to-be-played video, the solution in this embodiment of this application can intelligently analyze a reason why the video quality of the to-be-played video is poor, to perform image quality enhancement processing on the to-be-played video in a targeted manner, thereby improving the video quality of the to-be-played video.

In a possible implementation, the performing enhancement processing on the to-be-played video based on the first parameter and/or the second parameter, to generate an enhanced video includes:
if the first parameter is less than the first preset threshold, performing the enhancement processing on luminance path data of the to-be-played video based on the first parameter, to generate the enhanced video; and
if the first parameter is less than the first preset threshold, and the second parameter of the to-be-played video satisfies the first preset condition, performing the enhancement processing on the luminance path data of the to-be-played video based on the first parameter and the second parameter, to generate the enhanced video.

With reference to the first aspect, in some implementations of the first aspect, the performing enhancement processing on the to-be-played video based on the first parameter and/or the second parameter, to generate an enhanced video includes:
performing the enhancement processing on luminance path data of the to-be-played video based on the first parameter and/or the second parameter, to generate the enhanced video.

In the solution of this application, when the to-be-played video is enhanced, only Y-path data of the to-be-played video may be enhanced. On the one hand, because the method for enhancing video image quality provided in this embodiment of this application may be applied to real-time processing, performing enhancement processing on only the Y-path data of the to-be-played video can improve processing efficiency of the electronic device in enhancing video image quality. On the other hand, because eyes of a user are usually more sensitive to brightness, enhancement processing is performed on only the Y-path data of the to-be-played video, to obviously improve video watching experience of the user.

With reference to the first aspect, in some implementations of the first aspect, the determining, if the first parameter is less than the first preset threshold, whether a second parameter of the to-be-played video satisfies a first preset condition includes:
if a value of the resolution is greater than or equal to the first preset threshold, obtaining a classification tag of the to-be-played video;
determining whether the classification tag belongs to a preset tag, where the preset tag includes a first tag and a second tag; and
if the classification tag belongs to the first tag, determining whether the value of the dynamic range of the to-be-played video is less than the second preset threshold and whether satisfies a second preset condition, where the value of the dynamic range is obtained based on a ratio of a quantity of pixels in a first grayscale interval in a histogram of the to-be-played video, and the second preset condition indicates being greater than the second preset threshold; and
the performing enhancement processing on the to-be-played video based on the first parameter and/or the second parameter, to generate an enhanced video includes:
   if the value of the dynamic range is less than the second preset threshold, and satisfies the second preset condition, determining the dynamic range as the second parameter, and performing enhancement processing on the to-be-played video based on the value of the dynamic range, to generate the enhanced video.

It should be understood that the first tag may refer to a tag of a photographing scenario in which a bright light area and a dark light area exist. For example, the first tag may include: a tag of an indoor light source photographing scenario, a tag of a night scene photographing scenario, a tag of a sky photographing scenario, or a tag of a glass wall (for example, a glass wall with high saturation).

In the solution of this application, the first tag is a tag of a photographing scenario in which dynamic range enhancement needs to be performed. If the to-be-played video belongs to the first tag, it may be further determined whether dynamic range enhancement needs to be performed on the to-be-played video, to enhance the dynamic range of the to-be-played video.

In this embodiment of this application, it may be determined first whether a value of the resolution of the to-be-played video is less than the first preset threshold. If the resolution of the to-be-played video is greater than or the first preset threshold, it may indicate that the resolution is not the factor that affects video quality of the to-be-played video. Further, it may be determined whether the to-be-played video belongs to a preset scenario (for example, the first tag). If the tag of the to-be-played video is the first tag, it may be determined whether the dynamic range is the factor that affects video quality of the to-be-played video. For example, if the classification tag belongs to the first tag, it is determined whether the value of the dynamic range satisfies the second preset condition. It can be understood as determining whether the ratio of the quantity of pixels in the first grayscale interval in the to-be-played video is greater than the second preset threshold (for example, 0.6). If whether the ratio of the quantity of pixels in the first grayscale interval (for example, a middle grayscale area, for example, an interval in which grayscale values are [100, 155]) in the to-be-played video is greater than the second preset threshold, it indicates that a ratio of middle grayscale pixels in the to-be-played video is large. In this case, the to-be-played video has a problem that an overall image is gray and lacks transparency, and it may be determined that the dynamic range is the factor that affects video quality of the to-be-played video.

With reference to the first aspect, in some implementations of the first aspect, the determining whether the value of the dynamic range of the to-be-played video is less than the second preset threshold includes:
determining whether the ratio of the quantity of pixels in the first grayscale interval in the histogram of the to-be-played video is greater than a fourth preset threshold.

With reference to the first aspect, in some implementations of the first aspect, the performing enhancement processing on the to-be-played video based on the value of the dynamic range, to generate the enhanced video includes:
obtaining the ratio of the quantity of pixels in the first grayscale interval;
obtaining a first value and a second value based on the ratio of the quantity of pixels in the first grayscale interval;
obtaining a mapping relationship based on the first value, the second data, and preset coordinate data, where the mapping relationship indicates an association relationship between an input grayscale value and an output grayscale value; and
performing the enhancement processing on the to-be-played video based on the mapping relationship, to generate the enhanced video.

In a possible implementation, the mapping relationship may also be a broken line, a table, a function, or the like. This is not limited in this application.

With reference to the first aspect, in some implementations of the first aspect, the performing the enhancement processing on the to-be-played video based on the mapping relationship, to generate the enhanced video includes:
performing the enhancement processing on a luminance path of the to-be-played video based on the mapping relationship, to generate the enhanced video.

With reference to the first aspect, in some implementations of the first aspect, the mapping relationship is a mapping curve, and the ratio of the quantity of pixels in the first grayscale interval is directly proportional to a curvature of the mapping curve.

With reference to the first aspect, in some implementations of the first aspect, further including:
if the classification tag belongs to the second tag, determining whether a ratio value of the high-frequency information of the to-be-played video is less than the third preset threshold; and
the performing enhancement processing on the to-be-played video based on the first parameter and/or the second parameter, to generate an enhanced video includes:
   if a ratio of the high-frequency information is less than the third preset threshold, performing enhancement processing on the to-be-played video based on the value of the high-frequency information, to generate the enhanced video, and determine the high-frequency information as the second parameter.

It should be understood that the second tag may be a tag of a scenario in which texture information is rich. For example, the second tag may include: a tag of scenery, a tag of building, a tag of porcelain crafts, a tag of artware, a tag of hand-crafted goods, and the like.

It should be further understood that the second tag is a tag of a photographing scenario in which detail enhancement needs to be performed. If the to-be-played video belongs to the second tag, it may be further determined whether detail enhancement needs to be performed on the to-be-played video, to enhance detail information of the to-be-played video.

In the solution of this application, when the resolution of the to-be-played video is greater than or equal to the first preset threshold, which can be understood as, when a reason affecting video quality is not a problem of the resolution, if the tag of the to-be-played video is the second tag, in this case, it may be determined whether the reason affecting the video quality is high-frequency information (for example, less high-frequency information leads to blurring details); and if a ratio of the high-frequency information of the to-be-played video is less than the third preset threshold, it may be determined that the factor that affects video quality of the to-be-played video is the high-frequency information.

With reference to the first aspect, in some implementations of the first aspect,
the performing enhancement processing on the to-be-played video based on the value of the high-frequency information, to generate the enhanced video and the performing the enhancement processing on luminance path data of the to-be-played video based on the second parameter, to generate the enhanced video includes:
performing Fourier transform processing on the luminance path data of the to-be-played video, to generate a frequency diagram of the to-be-played video;
determining an accumulated value of a high-frequency area in the frequency diagram based on the frequency diagram, where the accumulated value of the high-frequency area is a value obtained by traversing each pixel of the high-frequency area;
obtaining a Laplace sharpening coefficient based on the accumulated value of the high-frequency area, a preset slope value, and a preset intercept value;
obtaining a first video based on the Laplace sharpening coefficient and a second-order gradient image of the to-be-played video; and
performing fusion processing on the to-be-played video and the first video, to generate the enhanced video.

With reference to the first aspect, in some implementations of the first aspect, the determining whether a first parameter of the to-be-played video is less than a first preset threshold includes:
determining whether the first parameter of each frame of data in the to-be-played video is less than the first preset threshold.

With reference to the first aspect, in some implementations of the first aspect, the determining whether a first parameter of the to-be-played video is less than a first preset threshold includes:
determining whether the first parameter of preset frame data in the to-be-played video is less than the first preset threshold.

With reference to the first aspect, in some implementations of the first aspect, the determining whether a second parameter of the to-be-played video satisfies a first preset condition includes:
determining whether the second parameter of each frame of data in the to-be-played video satisfies the first preset condition.

With reference to the first aspect, in some implementations of the first aspect, the determining whether a second parameter of the to-be-played video satisfies a first preset condition includes:
determining whether the second parameter of the preset frame data in the to-be-played video satisfies the first preset condition.

With reference to the first aspect, in some implementations of the first aspect, the detecting a play operation on the to-be-played video includes:
displaying a second display interface, where the second display interface includes a first prompt box, the first prompt box is used to prompt whether to perform the enhancement processing on the to-be-played video, the first prompt box includes a first control, and the first control is used to indicate to perform the enhancement processing on the to-be-played video; and
the determining, in response to the play operation, whether a first parameter of the to-be-played video is less than a first preset threshold includes:
   detecting a first operation on the first control; and
   determining, in response to the first operation, whether the first parameter of the to-be-played video is less than the first preset threshold.

With reference to the first aspect, in some implementations of the first aspect, when the enhanced video is saved, further including:
displaying a second prompt box, where the second prompt box is used to prompt a storage mode of the enhanced video, where the storage mode includes: a first storage mode and a second storage mode, the first storage mode refers to replacing the to-be-played video with the enhanced video, the second storage mode refers to storing the enhanced video into a first storage area, and the first storage area is different from a storage area for storing the to-be-played video.

With reference to the first aspect, in some implementations of the first aspect, the obtaining a to-be-played video includes:
obtaining the to-be-played video in the electronic device; or
receiving the to-be-played video sent by a first electronic device, where the first electronic device is a capture device of the to-be-played video.

In a possible implementation, the first electronic device may capture the to-be-played video, and the first electronic device may send the to-be-played video to the electronic device. For example, the first electronic device may be the capture device of the to-be-played video. The electronic device may be a receiving device of the to-be-played video. The first electronic device may send the to-be-played video to the electronic device by using third-party chat software.

In a possible implementation, the electronic device may locally obtain the to-be-played video.

In a possible implementation, the electronic device may obtain the to-be-played video from a server.

According to a second aspect, an electronic device is provided, where the electronic device includes a module/unit for performing the method for enhancing video image quality according to the first aspect or any implementation of the first aspect.

According to a third aspect, an electronic device is provided, where the electronic device includes one or more processors and a memory; and the memory is coupled to the one or more processors, the memory is configured to store computer program code, the computer program code includes a computer instruction, and the one or more processors invoke the computer instruction to enable the electronic device to perform the following:
obtaining a to-be-played video;
displaying a first display interface, where the first display interface includes the to-be-played video;
detecting a play operation on the to-be-played video;
determining, in response to the play operation, whether a first parameter of the to-be-played video is less than a first preset threshold, where the first parameter includes a resolution;
determining, if the first parameter is less than the first preset threshold, whether a second parameter of the to-be-played video satisfies a first preset condition, where the second parameter includes a value of a dynamic range and a value of high-frequency information, the first preset condition includes that the value of the dynamic range of the to-be-played video is less than a second preset threshold, and/or the value of the high-frequency information of the to-be-played video is than a third preset threshold, the value of the high-frequency information is an accumulated value of high-frequency information in a frequency domain diagram of the to-be-played video, and the high-frequency information includes edge information and detail information of an image in the to-be-played video;
performing enhancement processing on the to-be-played video based on the first parameter and/or the second parameter, to generate an enhanced video; and
displaying or saving the enhanced video.

With reference to the third aspect, in some implementations of the third aspect, the one or more processors invoke the computer instruction to enable the electronic device to perform the following:
performing the enhancement processing on luminance path data of the to-be-played video based on the first parameter and/or the second parameter, to generate the enhanced video.

With reference to the third aspect, in some implementations of the third aspect, the one or more processors invoke the computer instruction to enable the electronic device to perform the following:
obtaining a classification tag of the to-be-played video;
determining whether the classification tag belongs to a preset tag, where the preset tag includes a first tag and a second tag; and
if the classification tag belongs to the first tag, determining whether the value of the dynamic range of the to-be-played video is less than the second preset threshold, where the value of the dynamic range is obtained based on a ratio of a quantity of pixels in a first grayscale interval in a histogram of the to-be-played video; and
the performing enhancement processing on the to-be-played video based on the first parameter and/or the second parameter, to generate an enhanced video includes:
   if the value of the dynamic range is less than the second preset threshold, performing enhancement processing on the to-be-played video based on the value of the dynamic range, to generate the enhanced video.

With reference to the third aspect, in some implementations of the third aspect, the one or more processors invoke the computer instruction to enable the electronic device to perform the following:
determining whether the ratio of the quantity of pixels in the first grayscale interval in the histogram of the to-be-played video is greater than a fourth preset threshold.

With reference to the third aspect, in some implementations of the third aspect, the one or more processors invoke the computer instruction to enable the electronic device to perform the following:
obtaining the ratio of the quantity of pixels in the first grayscale interval;
obtaining a first value and a second value based on the ratio of the quantity of pixels in the first grayscale interval;
obtaining a mapping relationship based on the first value, the second data, and preset coordinate data, where the mapping relationship indicates an association relationship between an input grayscale value and an output grayscale value; and
performing the enhancement processing on the to-be-played video based on the mapping relationship, to generate the enhanced video.

With reference to the third aspect, in some implementations of the third aspect, the one or more processors invoke the computer instruction to enable the electronic device to perform the following:
performing the enhancement processing on a luminance path of the to-be-played video based on the mapping relationship, to generate the enhanced video.

With reference to the third aspect, in some implementations of the third aspect, the mapping relationship is a mapping curve, and the ratio of the quantity of pixels in the first grayscale interval is directly proportional to a curvature of the mapping curve.

With reference to the third aspect, in some implementations of the third aspect, the one or more processors invoke the computer instruction to enable the electronic device to perform the following:
if the classification tag belongs to the second tag, determining whether the value of the high-frequency information of the to-be-played video is less than the third preset threshold; and
the performing enhancement processing on the to-be-played video based on the first parameter and/or the second parameter, to generate an enhanced video includes:
   if a ratio of the high-frequency information is less than the third preset threshold, performing enhancement processing on the to-be-played video based on the value of the high-frequency information, to generate the enhanced video.

With reference to the third aspect, in some implementations of the third aspect, the one or more processors invoke the computer instruction to enable the electronic device to perform the following:
performing Fourier transform processing on the luminance path data of the to-be-played video, to generate a frequency diagram of the to-be-played video;
determining an accumulated value of a high-frequency area in the frequency diagram based on the frequency diagram, where the accumulated value of the high-frequency area is a value obtained by traversing each pixel of the high-frequency area;
obtaining a Laplace sharpening coefficient based on the accumulated value of the high-frequency area, a preset slope value, and a preset intercept value;
obtaining a first video based on the Laplace sharpening coefficient and a second-order gradient image of the to-be-played video; and
performing fusion processing on the to-be-played video and the first video, to generate the enhanced video.

With reference to the third aspect, in some implementations of the third aspect, the one or more processors invoke the computer instruction to enable the electronic device to perform the following:
determining whether the first parameter of each frame of data in the to-be-played video is less than the first preset threshold.

With reference to the third aspect, in some implementations of the third aspect, the one or more processors invoke the computer instruction to enable the electronic device to perform the following:
determining whether the first parameter of preset frame data in the to-be-played video is less than the first preset threshold.

With reference to the third aspect, in some implementations of the third aspect, the one or more processors invoke the computer instruction to enable the electronic device to perform the following:
determining whether the second parameter of each frame of data in the to-be-played video satisfies the first preset condition.

With reference to the third aspect, in some implementations of the third aspect, the one or more processors invoke the computer instruction to enable the electronic device to perform the following:
determining whether the second parameter of the preset frame data in the to-be-played video satisfies the first preset condition.

With reference to the third aspect, in some implementations of the third aspect, the one or more processors invoke the computer instruction to enable the electronic device to perform the following:
displaying a second display interface, where the second display interface includes a first prompt box, the first prompt box is used to prompt whether to perform the enhancement processing on the to-be-played video, the first prompt box includes a first control, and the first control is used to indicate to perform the enhancement processing on the to-be-played video; and
the determining, in response to the play operation, whether a first parameter of the to-be-played video is less than a first preset threshold includes:
   detecting a first operation on the first control; and
   determining, in response to the first operation, whether the first parameter of the to-be-played video is less than the first preset threshold.

With reference to the third aspect, in some implementations of the third aspect, when the enhanced video is saved, the one or more processors invoke the computer instruction to enable the electronic device to perform the following:
displaying a second prompt box, where the second prompt box is used to prompt a storage mode of the enhanced video, where
the storage mode includes: a first storage mode and a second storage mode, the first storage mode is a storage mode of replacing the to-be-played video with the enhanced video, the second storage mode is storing the enhanced video into a first storage area, and the first storage area is different from a storage area for storing the to-be-played video.

With reference to the third aspect, in some implementations of the third aspect, the one or more processors invoke the computer instruction to enable the electronic device to perform the following:
obtaining the to-be-played video in the electronic device; or
receiving the to-be-played video sent by a first electronic device, where the first electronic device is a capture device of the to-be-played video.

According to a fourth aspect, an electronic device is provided, where the electronic device includes one or more processors and a memory; and the memory is coupled to the one or more processors, the memory is configured to store computer program code, the computer program code includes a computer instruction, and the one or more processors invoke the computer instruction to enable the electronic device to perform the method according to the first aspect or any implementation of the first aspect.

According to a fifth aspect, a chip system is provided, where the chip system is applied to an electronic device, the chip system includes one or more processors, and the processor is configured to invoke a computer instruction to enable the electronic device to perform the method according to the first aspect or any implementation of the first aspect.

According to a sixth aspect, a computer-readable storage medium is provided, where the computer-readable storage medium stores computer program code, and when the computer program code is run by an electronic device, the electronic device is enabled to perform the method according to the first aspect or any implementation of the first aspect.

According to a seventh aspect, a computer program product is provided, and the computer program product includes: computer program code, where when the computer program code is run by an electronic device, the electronic device is enabled to perform the method according to the first aspect or any implementation of the first aspect.

Based on the solution of this application, the to-be-played video is obtained; the first display interface is displayed, where the first display interface includes the to-be-played video and a first control, and the first control is used to indicate to perform enhancement processing on the to-be-played video; a first play operation on the first control is detected; it is determined first whether a first parameter of the to-be-played video is less than a first preset threshold, where the first parameter includes a resolution, and a second parameter that is in the first parameter of the to-be-played video and that satisfies a first preset condition is determined, where the first parameter includes at least two of a resolution, a dynamic range, and high-frequency information; if the first parameter is less than the first preset threshold, it is determined whether the second parameter of the to-be-played video satisfies the first preset condition; enhancement processing is performed on the to-be-played video based on the first parameter and/or the second parameter, to generate an enhanced video; and the enhanced video is displayed or saved. It can be understood as: in this embodiment of this application, before image quality enhancement processing is performed on the to-be-played video, the to-be-played video may be analyzed first, to determine a factor that affects the video quality of the to-be-played video. When the factor that affects the video quality of the to-be-played video is determined, image quality enhancement processing is performed on the to-be-played video in a targeted manner, to improve the video quality of the to-be-played video. Compared with an existing manner in which enhancement processing is directly performed on one aspect of the to-be-played video, the solution in this embodiment of this application can intelligently analyze a reason why the video quality of the to-be-played video is poor, to perform image quality enhancement processing on the to-be-played video in a targeted manner, thereby improving the video quality of the to-be-played video.

### BRIEF DESCRIPTION OF DRAWINGS

FIG. 1 is a schematic diagram of a hardware system of an electronic device applicable to this application;
FIG. 2 is a schematic diagram of a software system of an electronic device applicable to this application;
FIG. 3 is a schematic diagram of an application scenario applicable to an embodiment of this application;
FIG. 4 is a schematic flowchart of a method for enhancing video image quality according to an embodiment of this application;
FIG. 5 is a schematic flowchart of another method for enhancing video image quality according to an embodiment of this application;
FIG. 6 is a schematic diagram of contrast enhancement algorithm processing according to an embodiment of this application;
FIG. 7 is a schematic diagram of a curve for mapping processing according to an embodiment of this application;
FIG. 8 is a schematic diagram of adaptive sharpness algorithm processing according to an embodiment of this application;
FIG. 9 is a schematic diagram of original data and a frequency domain diagram corresponding to the original data according to an embodiment of this application;
FIG. 10 is a schematic diagram of generating an image with enhanced details according to an embodiment of this application;
FIG. 11A and FIG. 11B are an interactive flowchart of still another method for enhancing video image quality according to an embodiment of this application;
FIG. 12 is a schematic diagram of a graphical user interface according to an embodiment of this application;
FIG. 13 is a schematic diagram of another graphical user interface according to an embodiment of this application;
FIG. 14 is a schematic diagram of still another graphical user interface according to an embodiment of this application;
FIG. 15 is a schematic diagram of still another graphical user interface according to an embodiment of this application;
FIG. 16 is a schematic diagram of still another graphical user interface according to an embodiment of this application;
FIG. 17 is a schematic diagram of still another graphical user interface according to an embodiment of this application;
FIG. 18 is a schematic diagram of still another graphical user interface according to an embodiment of this application;
FIG. 19 is a schematic diagram of still another graphical user interface according to an embodiment of this application;
FIG. 20 is a schematic diagram of still another graphical user interface according to an embodiment of this application;
FIG. 21 is a schematic diagram of still another graphical user interface according to an embodiment of this application;
FIG. 22 is a schematic diagram of still another graphical user interface according to an embodiment of this application;
FIG. 23 is a schematic diagram of a structure of an electronic device according to an embodiment of this application; and
FIG. 24 is a schematic diagram of a structure of an electronic device according to an embodiment of this application.

### DESCRIPTION OF EMBODIMENTS

In embodiments of this application, terms such as "first" and "second" are used only for the purpose of description and cannot be understood as indicating or implying relative importance or implicitly indicating the number of technical features denoted. Therefore, a feature limited by "first" or "second" may explicitly or implicitly include one or more of the features. In descriptions of embodiments of this embodiment, unless otherwise stated, "a plurality of" means two or more.

For ease of understanding of the embodiments of this application, related concepts involved in the embodiments of this application are briefly described first.

### 1. Dynamic range

The dynamic range is a range within which the camera can capture tone detail information of an image, and generally refers to a range from a minimum value to a maximum overflow value. In short, the dynamic range may describe a ratio of a brightest tone to a darkest tone recorded by the camera in a single frame.

### 2. Histogram

The histogram may be used for describing grayscale distribution of an entire image. A horizontal axis of the histogram may represent a grayscale value (0 to 255); a vertical axis of the histogram may represent a quantity of pixels of a same grayscale value in an image; and brightness, grayscale distribution, and contrast of an image may be intuitively displayed by using the histogram.

### 3. Image super resolution (image super resolution, SR)

The image super resolution refers to a process of restoring a high resolution (high resolution, HR) image from a low resolution (low resolution, LR) image.

### 4. Fourier transform

The Fourier transform is an algorithm in which a function satisfying a condition is expressed as a trigonometric function (a sine and/or cosine function) or a linear combination of integrals thereof.

### 5. Fast Fourier Transform (Fast Fourier Transform, FFT)

The Fast Fourier Transform represents an efficient and fast calculation method for calculating the discrete Fourier transform by using an electronic device.

### 6. Discrete Cosine Transform (Discrete Cosine Transform, DCT)

The Discrete Cosine Transform is an algorithm for approximating an image by using a sum of cosine functions of different frequencies and amplitudes, and is actually a real part of Fourier transform.

### 7. Laplace sharpening algorithm

The Laplace sharpening algorithm is an algorithm that uses a Laplace operator to perform edge enhancement on an image.

The Laplace operator is an image neighborhood enhancement algorithm based on pixel grayscale differential calculation within an image neighborhood, and is derived by using a second-order differential. A basic idea is: When a grayscale of a central pixel within a neighborhood is lower than an average grayscale of other pixels within the neighborhood, the grayscale of the central pixel should be further reduced. When a grayscale of a central pixel in a neighborhood is higher than an average grayscale of other pixels in the neighborhood, the grayscale of the central pixel should be further increased.

The following describes a method for enhancing video image quality and an electronic device in the embodiments of this application with reference to the accompanying drawings.

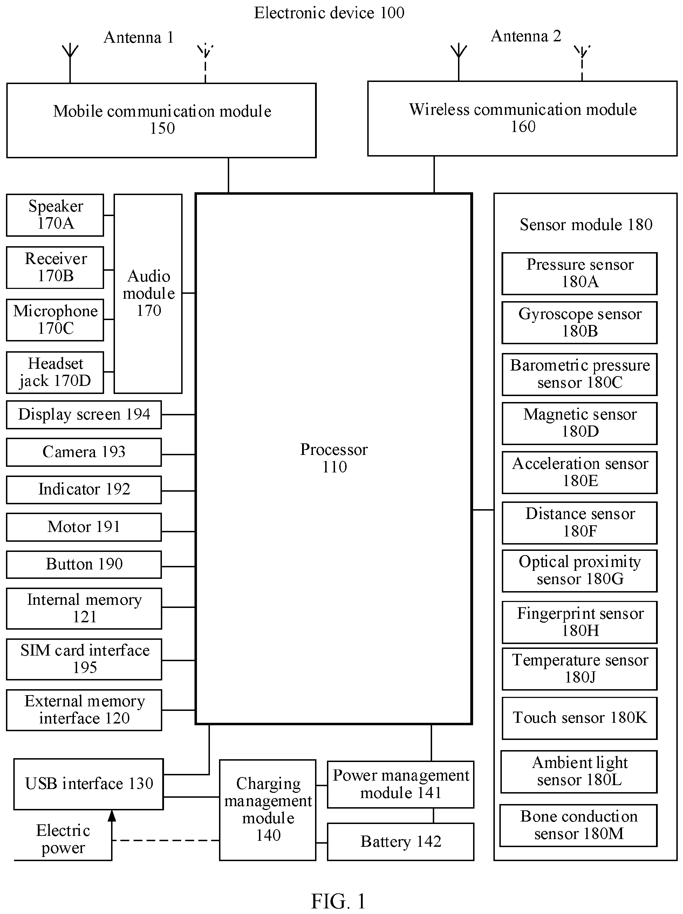

FIG. 1 shows a hardware system of an electronic device applicable to this application.

The electronic device 100 may be a mobile phone, a smart screen, a tablet computer, a wearable electronic device, an in-vehicle electronic device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a projector, or the like. A specific type of the electronic device 100 is not limited in this embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It should be noted that, the structure shown in FIG. 1 does not constitute a specific limitation on the electronic device 100. In some other embodiments of this application, the electronic device 100 may include more or less components than those shown in FIG. 1, or the electronic device 100 may include a combination of some of the components shown in FIG. 1, or the electronic device 100 may include subcomponents of some of the components shown in FIG. 1. The components shown in FIG. 1 may be implemented by hardware, software, or a combination of software and hardware.

The processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent devices or integrated devices. The controller may generate an operation control signal based on an instruction operation code and a time sequence signal, to complete control of instruction fetching and instruction executing.

A memory may be further disposed in the processor 110, and is configured to store an instruction and data. In some embodiments, the memory in the processor 110 is a cache. The memory may store an instruction or data that has been used or cyclically used by the processor 110. If the processor 110 needs to use the instruction or the data again, the processor may directly invoke the instruction or the data from the memory. This avoids repeated access, reduces waiting time of the processor 110, and improves system efficiency.

For example, the processor 110 may be configured to perform the method for enhancing video image quality in this embodiment of this application, for example, obtaining a to-be-played video; displaying a first display interface, where the first display interface includes the to-be-played video; detecting a play operation on the to-be-played video; determining, in response to the play operation, whether a first parameter of the to-be-played video is less than a first preset threshold, where the first parameter includes a resolution; determining, if the first parameter is less than the first preset threshold, whether a second parameter of the to-be-played video satisfies a first preset condition, where the second parameter includes a value of a dynamic range and a value of high-frequency information, the first preset condition includes that the value of the dynamic range of the to-be-played video is less than a second preset threshold, and/or the value of the high-frequency information of the to-be-played video is than a third preset threshold, the value of the high-frequency information is an accumulated value of high-frequency information in a frequency domain diagram of the to-be-played video, and the high-frequency information includes edge information and detail information of an image in the to-be-played video; performing enhancement processing on the to-be-played video based on the first parameter and/or the second parameter, to generate an enhanced video; and displaying or saving the enhanced video.

A connection relationship among modules shown in FIG. 1 is merely an example for description, and constitutes no limitation on the connection relationship among the modules of the electronic device 100. Optionally, the modules of the electronic device 100 may alternatively use a combination of a plurality of connection manners in the above embodiment.

A wireless communication function of the electronic device 100 may be implemented by using a device such as the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed to improve antenna utilization. For example: the antenna 1 may be multiplexed into a diversity antenna of a wireless local area network. In some other embodiments, an antenna may be used in combination with a tuning switch.

The electronic device 100 may implement a display function by using the GPU, the display screen 194, and the application processor. The GPU is a microprocessor for image processing, and is connected to the display screen 194 and the application processor. The GPU is configured to perform mathematical and geometric computation, and render an image. The processor 110 may include one or more GPUs, and the GPUs execute a program instruction to generate or change display information.

The display screen 194 may be configured to display an image or a video.

For example, in this embodiment of this application, the display screen 194 may be configured to display a second image.

The electronic device 100 may implement a photographing function by using the ISP, the camera 193, the video coder/decoder, the GPU, the display screen 194, the application processor, and the like.

The ISP is configured to process data fed back by the camera 193. For example, during shooting, a shutter is pressed, light is transmitted to a photosensitive element of the camera through the camera, an optical signal is converted into an electrical signal, and the photosensitive element of the camera transmits the electrical signal to the ISP for processing, to convert the electrical signal into a visible image. The ISP may optimize an algorithm for noise, brightness, and complexion of the image, and the ISP may further optimize parameters, such as exposure and color temperature of a photographing scenario. In some embodiments, the ISP may be arranged in the camera 193.

The camera 193 (which may also be referred to as a lens) is configured to capture a static image or a video. A photographing function may be implemented by triggering and enabling an application program instruction, for example, photographing and obtaining an image of any scenario. The camera may include an imaging lens, a light filter, an image sensor, and other components. Light emitted or reflected by an object enters the imaging lens, passes through the light filter, and finally converges on the image sensor. The imaging lens is mainly configured to perform convergence imaging on light emitted or reflected by all objects (which may also be referred to as a to-be-photographed scenario and a target scenario, and may also be understood as a scenario image expected to be photographed by a user) in a photographing visual angle; the light filter is mainly configured to filter out redundant light waves (for example, light waves other than visible light, such as infrared) in the light; and the image sensor may be a charge coupled device (charge coupled device, CCD) or a complementary metal-oxide-semiconductor (complementary metal-oxide-semiconductor, CMOS) optoelectronic transistor. The image sensor is mainly configured to perform photoelectric conversion on a received optical signal, to obtain an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV.

In some embodiments, the electronic device 100 may include one or N cameras 193, where N is a positive integer greater than 1.

The camera 193 may be located in front of the electronic device 100 or on the back of the electronic device 100. A specific quantity and arrangement of cameras may be set according to requirements, and is not limited in this application.

The digital signal processor is configured to process a digital signal, and may process another digital signal in addition to a digital image signal. For example, when the electronic device 100 selects a frequency, the digital signal processor is configured to perform Fourier transform on frequency energy.

The video codec is configured to: compress or decompress a digital video. The electronic device 100 may support one or more video codecs. In this way, the electronic device 100 may play or record videos in a plurality of coding formats, for example, a moving picture experts group (moving picture experts group, MPEG) 1, an MPEG 2, an MPEG 3, and an MPEG 4.

The gyroscope sensor 180B may be configured to determine a motion posture of the electronic device 100. In some embodiments, an angular velocity of the electronic device 100 around three axes (that is, x, y, and z axes) may be determined through the gyroscope sensor 180B. The gyroscope sensor 180B may be configured to implement image stabilization during shooting. For example, when the shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may also be used for scenes such as navigation and a motion sensing game.

The acceleration sensor 180E may detect magnitudes of accelerations of the electronic device 100 in various directions (generally in x, y, and z axes). When the electronic device 100 is still, a magnitude and a direction of gravity may be detected. The acceleration sensor 180E may be further configured to recognize poses of the electronic device 100, and the poses serve as input parameters for landscape and portrait mode switchover, a pedometer and other application programs.

The distance sensor 180F is configured to measure a distance. The electronic device 100 may measure a distance in an infrared manner or a laser manner. In some embodiments, for example, in a photographing scenario, the electronic device 100 may measure a distance through the distance sensor 180F, to implement quick focusing.

The ambient light sensor 180L is configured to sense ambient light brightness. The electronic device 100 may adaptively adjust brightness of the display screen 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may implement unlocking, application lock access, photographing, answering incoming calls, and other functions by using features of the acquired fingerprint.

The touch sensor 180K is also referred to as a touch device. The touch sensor 180K may be disposed on the display screen 194, and the touch sensor 180K and the display screen 194 form a touchscreen, where the touchscreen is also referred to as a "touch control screen". The touch sensor 180K is configured to detect a touch operation performed on or near the touch sensor 180K. The touch sensor 180K may transfer the detected touch operation to the application processor to determine a type of a touch event. A visual output related to the touch operation may be provided through the display screen 194. In some other embodiments, the touch sensor 180K may alternatively be disposed on a surface of the electronic device 100 at a position different from that of the display screen 194.

The foregoing describes a hardware system of the electronic device 100 in detail, and the following describes a software system of the electronic device 100.

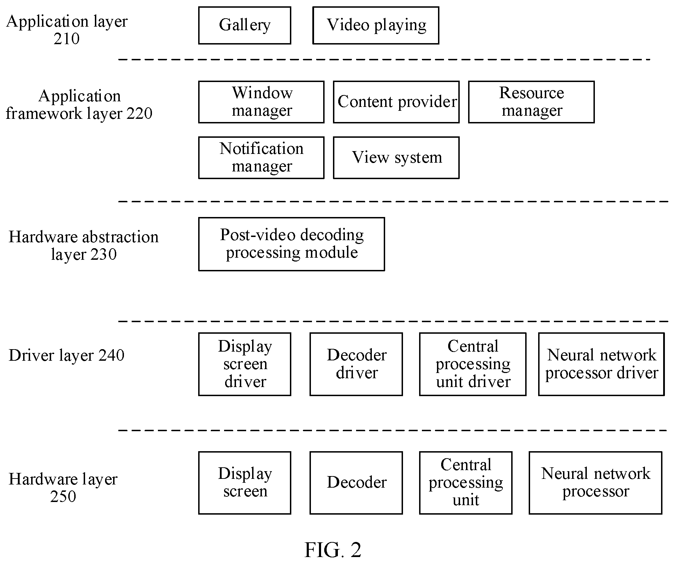

FIG. 2 is a schematic diagram of a software system of an electronic device according to an embodiment of this application.

As shown in FIG. 2, the system architecture may include an application layer 210, an application framework layer 220, a hardware abstraction layer 230, a driver layer 240, and a hardware layer 250.

For example, the application layer 210 may include a gallery application program and a video playing application program.

Optionally, the application layer 210 may further include application programs such as Camera, Calendar, Phone, Map, Navigation, WLAN, Bluetooth, Music, Video, and Messages.

For example, the application framework layer 220 provides an application programming interface (application programming interface, API) and a programming framework for an application program of the application layer. The application framework layer may include some predefined functions.

For example, the application frame layer 220 includes a window manager, a content provider, a view system, a resource manager, and a notification manager.

The window manager is configured to manage a window program. The window manager may obtain a size of a display screen, determine whether there is a status bar, screen locking, and screen capturing.

The content provider is configured to: store and obtain data, and enable the data to be accessed by an application program. The data may include a video, an image, an audio, a call, a browsing history and a bookmark, and a phone book.

The view system includes visual controls such as a control for displaying a text and a control for displaying an image. The view system may be configured to construct an application program. The display interface may include one or more views. For example, a display interface including an SMS notification icon may include a view for displaying a text and a view for displaying an image.

The resource manager provides various resources for the application program, such as a localized string, an icon, a picture, a layout file, and a video file.

The notification manager enables an application program to display notification information in a status bar, and may be configured to convey and notify a type message. The notification manager may automatically disappear after a short pause without requiring a user interaction. For example, the notification manager is configured to notify download completion and a message reminder. The notification manager may further manage a notification that appears in a top status bar of the system in a form of a graph or a scroll bar text, for example, a notification of an application program running on the background. The notification manager may further manage a notification that appears on a screen in a form of a dialog box, for example, text information is displayed in the status bar, an announcement is given, the electronic device vibrates, or the indicator light blinks.

For example, the hardware abstraction layer 230 is configured to abstract hardware.

For example, the hardware abstraction layer 230 includes a post-video decoding processing module. The post-video decoding processing module is configured to perform the method for enhancing video image quality in the embodiments of this application.

For example, the driver layer 240 is configured to provide drivers for different hardware devices.

For example, the driver layer may include a display screen driver, a decoder driver, a central processing unit driver, or a neural network processor driver.

For example, the hardware layer 250 is located at a bottom layer of a software system.

For example, the hardware layer 250 may include a display screen, a decoder, a central processing unit, and a neural network processor, where the display screen is configured to display a video; the decoder is configured to decompress video data; the central processing unit may be configured to perform specific algorithm processing on video data in the method for enhancing video image quality; and the neural network processor is configured to execute an algorithm related to the neural network model in the method for enhancing video image quality.

Currently, because the electronic device for capturing a video has a poor processing capability; or the user has poor shooting skills in capturing videos; or due to factors such as a poor network transmission environment during video transmission, video quality of the video played on the electronic device is poor, and the user has a poor video watching experience.

For example, when limited by a shooting capability of an electronic device capturing a video, even if a resolution of an image in a user-generated content (User-generated content, UGC) video in the video is high, if a dynamic range of the image in the video is small, that is, a contrast is low, a video with a high dynamic range cannot be played, which affects watching experience of the user.

For example, when limited by a shooting capability of an electronic device capturing a video, or limited by shooting skills of a user, an image of a UGC video in the video may have a problem such as blurring details, which affects watching experience of the user.

For example, when a captured video includes a portrait, a problem such as blurring edge details in a hair area or an eyebrow area of the portrait may exist; or when a captured video includes a museum exhibition or artifact, texture details in the exhibition or the artifact are blurred.

For example, when limited by a network transmission environment, to ensure video smoothness, a server usually preferentially transmits a low-definition video having a high compression ratio. Low definition of the video affects the watching experience of the user.

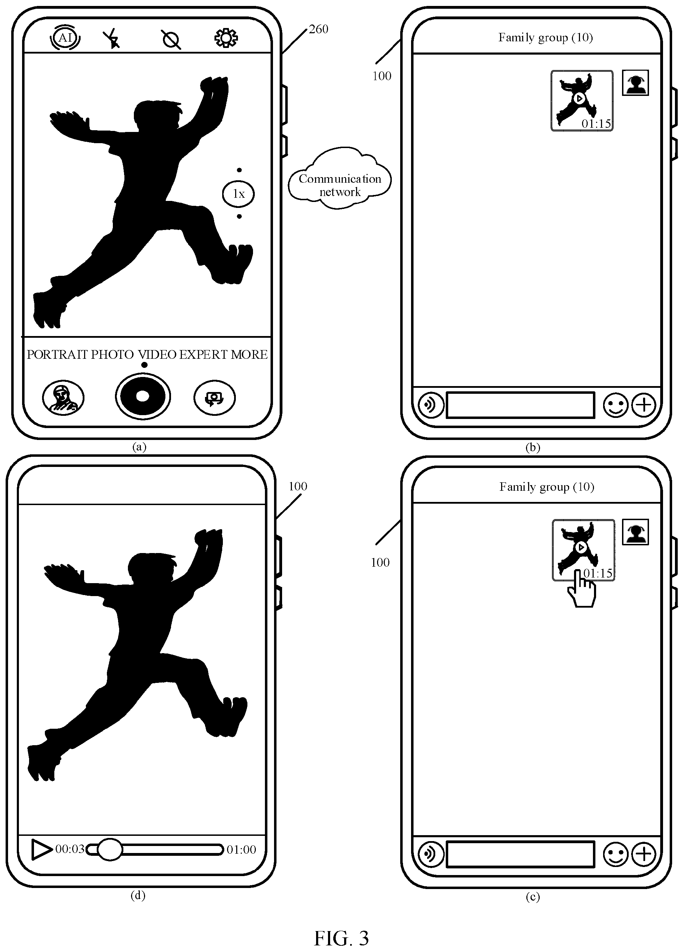

For example, as shown in FIG. 3, a first electronic device 260 is an original video capturing device. Poor shooting skills or a poor processing capability of the first electronic device 260 causes poor quality of a captured original video, as shown in (a) of FIG. 3. The first electronic device 260 sends the captured original video to one or more electronic devices 100 by using a communication network. The electronic device 100 is a player end of the original video. For example, the original video is sent to a family group by using a chat application program, as shown in (b) of FIG. 3. The electronic device 100 detects an operation of tapping to play the original video, as shown in (c) of FIG. 3. After the electronic device detects the operation of tapping to play the original video, the electronic device displays a play display interface, and the video displayed on the play display interface has poor quality, as shown in (d) of FIG. 3. This causes poor video watching experience of the user.

In view of this, the embodiments of this application provide a method for enhancing video image quality and an electronic device. In this embodiment of this application, a to-be-played video is obtained; the first display interface is displayed, where the first display interface includes the to-be-played video and a first control, and the first control is used to indicate to perform enhancement processing on the to-be-played video; a first operation on the first control is detected; a second parameter that is in a first parameter of the to-be-played video and that satisfies a first preset condition is determined, where the first parameter includes at least two of a resolution, a dynamic range, and high-frequency information; enhancement processing is performed on the to-be-played video based on the second parameter, to generate an enhanced video; and the enhanced video is displayed or saved. It can be understood as: in this embodiment of this application, before image quality enhancement processing is performed on the to-be-played video, the to-be-played video may be analyzed first, to determine a factor that affects the video quality of the to-be-played video. When the factor that affects the video quality of the to-be-played video is determined, image quality enhancement processing is performed on the to-be-played video in a targeted manner, to improve the video quality of the to-be-played video. Compared with an existing manner in which enhancement processing is directly performed on one aspect of the to-be-played video, the solution in this embodiment of this application can intelligently analyze a reason why the video quality of the to-be-played video is poor, to perform image quality enhancement processing on the to-be-played video in a targeted manner, thereby improving the video quality of the to-be-played video.

The following uses examples to describe application scenarios of the method for enhancing video image quality provided in this embodiment of this application.

The method for enhancing video image quality in this embodiment of this application may be applied to playing a video in a local electronic device. For example, the method may be applicable to: an electronic device to play a local video; or an electronic device to play a received video transmitted by another electronic device; or an electronic device to play a live video.

Optionally, the method for enhancing video image quality provided in this embodiment of this application may be applied to an electronic device to play a video in real time. It can be understood that, when a video is played in an electronic device, image quality enhancement processing is performed on the played video in real time, so that the video displayed on the electronic device is a video on which the image quality enhancement processing is performed.

Optionally, the method for enhancing video image quality in this embodiment of this application may further be applied to a video call scenario. The video call scenario may include, but is not limited to, the following scenarios:
a video call, a video conference application, a long or short video application, a live video broadcasting application, an online course video application, a portrait intelligent camera movement application scenario, a system camera recording function for recording videos, a portrait shooting scenario such as video surveillance or an intelligent peep hole, and other scenarios.

It should be understood that the foregoing descriptions are examples of application scenarios, and do not limit the application scenario of this application.

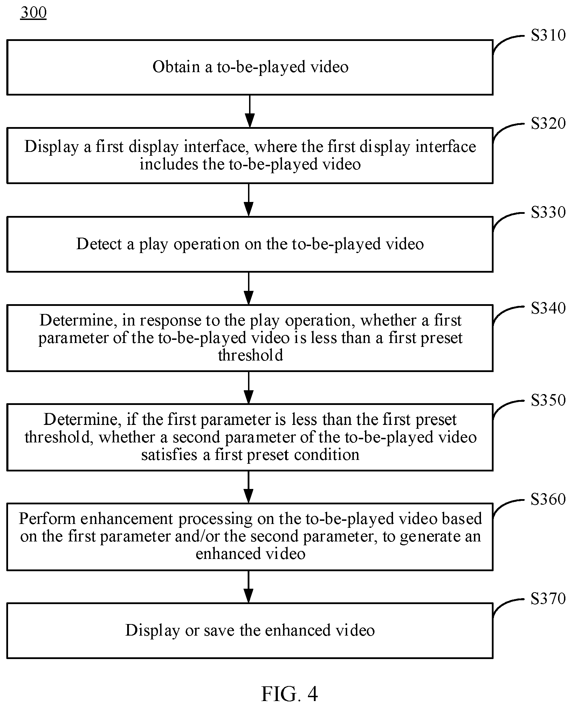

The following describes in detail the method for enhancing video image quality provided in this embodiment of this application with reference to FIG. 4 to FIG. 22.

FIG. 4 is a schematic flowchart of a method for enhancing video image quality according to an embodiment of this application. The method may be performed by the electronic device shown in FIG. 1; and the method 300 includes S310 to S370, and S310 to S370 are described in detail below.

S310: Obtain a to-be-played video.

Optionally, the obtaining a to-be-played video includes:
obtaining the to-be-played video in the electronic device; or
receiving the to-be-played video sent by a first electronic device, where the first electronic device is a capture device of the to-be-played video.

For example, the first electronic device may capture the to-be-played video, and the first electronic device may send the to-be-played video to the electronic device. For example, the first electronic device may be the capture device of the to-be-played video. The electronic device may be a receiving device of the to-be-played video. The first electronic device may send the to-be-played video to the electronic device by using third-party chat software.

For example, the electronic device may locally obtain the to-be-played video.

For example, the electronic device may obtain the to-be-played video from a server.

S320: Display a first display interface.

The first display interface includes the to-be-played video.

Optionally, the first display interface may be shown in (b) of FIG. 3, and the first display interface includes the to-be-played video.

S330: Detect a play operation on the to-be-played video.

Optionally, as shown in (c) of FIG. 3, the play operation may be an operation of tapping a play control of the to-be-played video.

Optionally, the play operation may also refer to an operation in which a voice indicates to play the to-be-played video; or the play operation may be an operation of indicating, in another indication manner, to play the to-be-played video. This is not displayed in this application.

S340: Determine, in response to the play operation, whether a first parameter of the to-be-played video is less than a first preset threshold.

The first parameter includes a resolution.

Optionally, the first preset threshold may be 360P.

In this embodiment of this application, before image quality enhancement processing is performed on the to-be-played video, the to-be-played video may be analyzed first. For example, it may be determined first whether the resolution of the to-be-played video is less than the first preset threshold. Then, other factors of the to-be-played video are analyzed.

For example, in this embodiment of this application, it may be determined first whether a value of the resolution of the to-be-played video is less than the first preset threshold. S350 is performed if the resolution of the to-be-played video is less than the first preset threshold. It can be understood as: before enhancement processing is performed on the to-be-played video, a priority for analyzing the resolution of the to-be-played video is higher than a priority for analyzing high-frequency information or a dynamic range of the to-be-played video.

In this embodiment of this application, when the to-be-played video is analyzed, the resolution of the to-be-played video may be preferentially determined. Because the resolution usually has a large impact on image quality of an image, in this embodiment of this application, when a factor that affects video quality of the to-be-played video is determined, whether the resolution is the factor that affects the video quality may be preferentially determined. If the resolution of the to-be-played video is less than the first preset threshold, it indicates that the resolution is the factor that affects video quality.

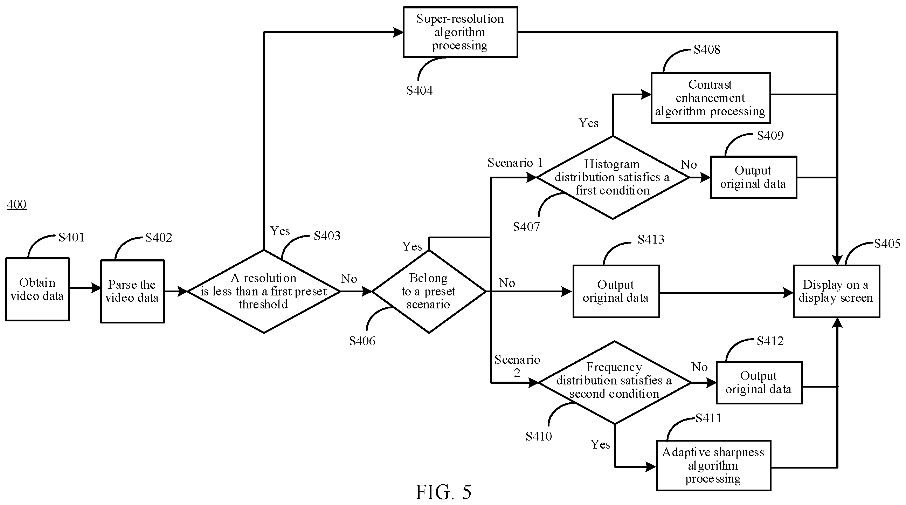

Optionally, when it is determined that the factor that affects the video quality of the to-be-played video is the resolution, super-resolution processing may be performed on the to-be-played video, to obtain a video on which super-resolution processing is performed, that is, an enhanced video. Optionally, for an implementation, refer to related descriptions of S403 in FIG. 5. Details are not described herein again.

For example, a super-resolution algorithm may include: an interpolation-based method, a reconstruction-based method, or a learning-based method.

For example, the super-resolution algorithm of the reconstruction-based method may include: super-resolution reconstruction based on a single image and super-resolution reconstruction based on an image sequence.

For example, super-resolution processing on the to-be-played video may be implemented based on a convolutional neural network (GAN) or a generative adversarial network (GAN); and for the implementation, further refer to related descriptions of super-resolution algorithm processing in Patent Application No. 202210599727.0.

Optionally, the determining whether a first parameter of the to-be-played video is less than a first preset threshold includes:
determining whether the first parameter of each frame of data in the to-be-played video is less than the first preset threshold.

For example, determining is performed based on each frame of data of the to-be-played video. It can be understood as: it is determined, based on each frame of data in the to-be-played video, that the first parameter of each frame of data in the to-be-played video is less than the first preset threshold. For example, it is assumed that the to-be-played video includes 10 frames of data, that is, a 1^{st} frame of data to a 10^{th} frame of data. It may be separately determined whether a first parameter of each of the 1^{st} frame of data to the 10^{th} frame of data is less than the first preset threshold.

Optionally, the determining whether a first parameter of the to-be-played video is less than a first preset threshold includes:
determining whether the first parameter of preset frame data in the to-be-played video is less than the first preset threshold.

For example, determining is performed based on the preset frame data in the to-be-played video. For example, it is assumed that the to-be-played video includes 20 frames of data, whether to be less than the first preset threshold may be determined based on a first parameter of a 1^{st} frame of data. If the first parameter of the 1^{st} frame of data is less than the first preset threshold, it may be considered that first parameters of the 1^{st} frame of data to a 10^{th} frame of data are less than the first preset threshold. Similarly, whether to be less than the first preset threshold may be determined based on a first parameter of an 11^{th} frame of data. If the first parameter of the 11^{th} frame of data is less than the first preset threshold, it may be considered that first parameters of the 11^{th} frame of data to a 20^{th} frame of data are less than the first preset threshold.

S350: Determine, if the first parameter is less than the first preset threshold, whether a second parameter of the to-be-played video satisfies a first preset condition.

The second parameter includes a value of a dynamic range and a value of high-frequency information, the first preset condition includes that the value of the dynamic range of the to-be-played video is less than a second preset threshold, and/or the value of the high-frequency information of the to-be-played video is than a third preset threshold, the value of the high-frequency information is an accumulated value of high-frequency information in a frequency domain diagram of the to-be-played video, and the high-frequency information includes edge information and detail information of an image in the to-be-played video.

Optionally, the determining whether a second parameter of the to-be-played video satisfies a first preset condition includes:
determining whether the second parameter of each frame of data in the to-be-played video satisfies the first preset condition.

Optionally, the determining whether a second parameter of the to-be-played video satisfies a first preset condition includes:
determining whether the second parameter of the preset frame data in the to-be-played video satisfies the first preset condition.

S360: Perform enhancement processing on the to-be-played video based on the first parameter and/or the second parameter, to generate an enhanced video.

Optionally, the performing enhancement processing on the to-be-played video based on the first parameter and/or the second parameter, to generate an enhanced video includes:
if the first parameter is less than the first preset threshold, performing the enhancement processing on luminance path data of the to-be-played video based on the first parameter, to generate the enhanced video; and
if the first parameter is less than the first preset threshold, and the second parameter of the to-be-played video satisfies the first preset condition, performing the enhancement processing on the luminance path data of the to-be-played video based on the first parameter and the second parameter, to generate the enhanced video.

In this embodiment of this application, before image quality enhancement processing is performed on the to-be-played video, the to-be-played video may be analyzed first, to determine a factor that affects the video quality of the to-be-played video. When the factor that affects the video quality of the to-be-played video is determined, image quality enhancement processing is performed on the to-be-played video in a targeted manner, to improve the video quality of the to-be-played video. Compared with an existing manner in which enhancement processing is directly performed on one aspect of the to-be-played video, the solution in this embodiment of this application can intelligently analyze a reason why the video quality of the to-be-played video is poor, to perform image quality enhancement processing on the to-be-played video in a targeted manner, thereby improving the video quality of the to-be-played video.

Optionally, the performing enhancement processing on the to-be-played video based on the first parameter and/or the second parameter, to generate an enhanced video includes:
performing the enhancement processing on luminance path data of the to-be-played video based on the first parameter and/or the second parameter, to generate the enhanced video.

In this embodiment of this application, when the to-be-played video is enhanced, only Y-path data of the to-be-played video may be enhanced. On the one hand, because the method for enhancing video image quality provided in this embodiment of this application may be applied to real-time processing, performing enhancement processing on only the Y-path data of the to-be-played video can improve processing efficiency of the electronic device in enhancing video image quality. On the other hand, because eyes of a user are usually more sensitive to brightness, enhancement processing is performed on only the Y-path data of the to-be-played video, to obviously improve video watching experience of the user.

Optionally, the determining, if the first parameter is less than the first preset threshold, whether a second parameter of the to-be-played video satisfies a first preset condition includes:
obtaining a classification tag of the to-be-played video;
determining whether the classification tag belongs to a preset tag, where the preset tag includes a first tag and a second tag; and
if the classification tag belongs to the first tag, determining whether the value of the dynamic range of the to-be-played video is less than the second preset threshold, where the value of the dynamic range is obtained based on a ratio of a quantity of pixels in a first grayscale interval in a histogram of the to-be-played video; and
the performing enhancement processing on the to-be-played video based on the first parameter and/or the second parameter, to generate an enhanced video includes:
   if the value of the dynamic range is less than the second preset threshold, performing enhancement processing on the to-be-played video based on the value of the dynamic range, to generate the enhanced video.

For example, the first tag may refer to a tag of a photographing scenario in which a bright light area and a dark light area exist. For example, the first tag may include: a tag of an indoor light source photographing scenario, a tag of a night scene photographing scenario, a tag of a sky photographing scenario, or a tag of a glass wall (for example, a glass wall with high saturation).

It should be understood that the first tag is a tag of a photographing scenario in which dynamic range enhancement needs to be performed. If the to-be-played video belongs to the first tag, it may be further determined whether dynamic range enhancement needs to be performed on the to-be-played video, to enhance the dynamic range of the to-be-played video.

Optionally, the determining whether the value of the dynamic range of the to-be-played video is less than the second preset threshold includes:
determining whether the ratio of the quantity of pixels in the first grayscale interval in the histogram of the to-be-played video is greater than a fourth preset threshold.

Optionally, the performing enhancement processing on the to-be-played video based on the value of the dynamic range, to generate the enhanced video includes:
obtaining the ratio of the quantity of pixels in the first grayscale interval;
obtaining a first value and a second value based on the ratio of the quantity of pixels in the first grayscale interval;
obtaining a mapping relationship based on the first value, the second data, and preset coordinate data, where the mapping relationship indicates an association relationship between an input grayscale value and an output grayscale value; and
performing the enhancement processing on the to-be-played video based on the mapping relationship, to generate the enhanced video.

The performing the enhancement processing on the to-be-played video based on the mapping relationship, to generate the enhanced video includes:
performing the enhancement processing on a luminance path of the to-be-played video based on the mapping relationship, to generate the enhanced video.

It should be understood that a smaller quantity of pixels in a low grayscale area in the histogram of the to-be-played video indicates a smaller quantity of dark pixels in a luminance space; and a smaller quantity of pixels in a high grayscale area in the histogram of the to-be-played video indicates a smaller quantity of bright pixels in the luminance space; and smaller quantities of dark pixels and bright pixels in the to-be-played video indicate low contrast in the to-be-played video. It can be understood as: the to-be-played video presents a gray display state and cannot display a bright image area and a dark image area.

In this embodiment of this application, it may be determined first whether a value of the resolution of the to-be-played video is less than the first preset threshold. If the resolution of the to-be-played video is greater than or the first preset threshold, it may indicate that the resolution is not the factor that affects video quality of the to-be-played video. Further, it may be determined whether the to-be-played video belongs to a preset scenario (for example, the first tag or the second tag). If the tag of the to-be-played video is the first tag, it may be determined whether the dynamic range is the factor that affects video quality of the to-be-played video. For example, if the classification tag belongs to the first tag, it is determined whether the value of the dynamic range is less than the second preset threshold. It can be understood as determining whether the ratio of the quantity of pixels in the first grayscale interval in the to-be-played video is greater than the fourth preset threshold (for example, 0.6). If whether the ratio of the quantity of pixels in the first grayscale interval (for example, a middle grayscale area, for example, an interval in which grayscale values are [100, 155]) in the to-be-played video is greater than the fourth preset threshold, it indicates that a ratio of middle grayscale pixels in the to-be-played video is large. In this case, the to-be-played video has a problem that an overall image is gray and lacks transparency, and it may be determined that the dynamic range is the factor that affects video quality of the to-be-played video.

Optionally, for an implementation, refer to related descriptions of S407 in FIG. 5. Details are not described herein again.

Optionally, the mapping relationship is a mapping curve, and the ratio of the quantity of pixels in the first grayscale interval is directly proportional to a curvature of the mapping curve.

Optionally, the method further includes:
if the classification tag belongs to the second tag, determining whether the value of the high-frequency information of the to-be-played video is less than the third preset threshold; and
the performing enhancement processing on the to-be-played video based on the first parameter and/or the second parameter, to generate an enhanced video includes:
   if a ratio of the high-frequency information is less than the third preset threshold, performing enhancement processing on the to-be-played video based on the value of the high-frequency information, to generate the enhanced video.

For example, the second tag may be a tag of a scenario in which texture information is rich.

For example, the second tag may include: a tag of scenery, a tag of building, a tag of porcelain crafts, a tag of artware, a tag of hand-crafted goods, and the like.

It should be understood that the second tag is a tag of a photographing scenario in which detail enhancement needs to be performed. If the to-be-played video belongs to the second tag, it may be further determined whether detail enhancement needs to be performed on the to-be-played video, to enhance detail information of the to-be-played video.

Optionally, the performing enhancement processing on the to-be-played video based on the value of the high-frequency information, to generate the enhanced video includes:
performing Fourier transform processing on the luminance path data of the to-be-played video, to generate a frequency diagram of the to-be-played video;
determining an accumulated value of a high-frequency area in the frequency diagram based on the frequency diagram, where the accumulated value of the high-frequency area is a value obtained by traversing each pixel of the high-frequency area;
obtaining a Laplace sharpening coefficient based on the accumulated value of the high-frequency area, a preset slope value, and a preset intercept value;
obtaining a first video based on the Laplace sharpening coefficient and a second-order gradient image of the to-be-played video; and
performing fusion processing on the to-be-played video and the first video, to generate the enhanced video.

Optionally, in this embodiment of this application, the user may not need to manually adjust the first parameter and/or the second parameter of the to-be-played video; and the electronic device may automatically analyze the video quality of the to-be-played video, and automatically perform, based on an analysis result, video enhancement processing on the to-be-played video based on the first parameter and/or the second parameter.

S370: Display or save the enhanced video.

Optionally, the to-be-played video may be enhanced in real time, and the enhanced video may be played.

Optionally, the enhanced video may be saved after the to-be-played video is enhanced, and the enhanced video is played when the enhanced video needs to be played subsequently.

Optionally, in this embodiment of this application, a priority for analyzing the resolution of the to-be-played video is higher than a priority for analyzing the dynamic range of the to-be-played video; and the priority for analyzing the dynamic range of the to-be-played video is higher than a priority for analyzing the high-frequency information of the to-be-played video. Optionally, in a case of saving the enhanced video, the method further includes:
displaying a second prompt box, where the second prompt box is used to prompt a storage mode of the enhanced video, where the storage mode includes: a first storage mode and a second storage mode, the first storage mode refers to replacing the to-be-played video with the enhanced video, the second storage mode refers to storing the enhanced video into a first storage area, and the first storage area is different from a storage area for storing the to-be-played video.

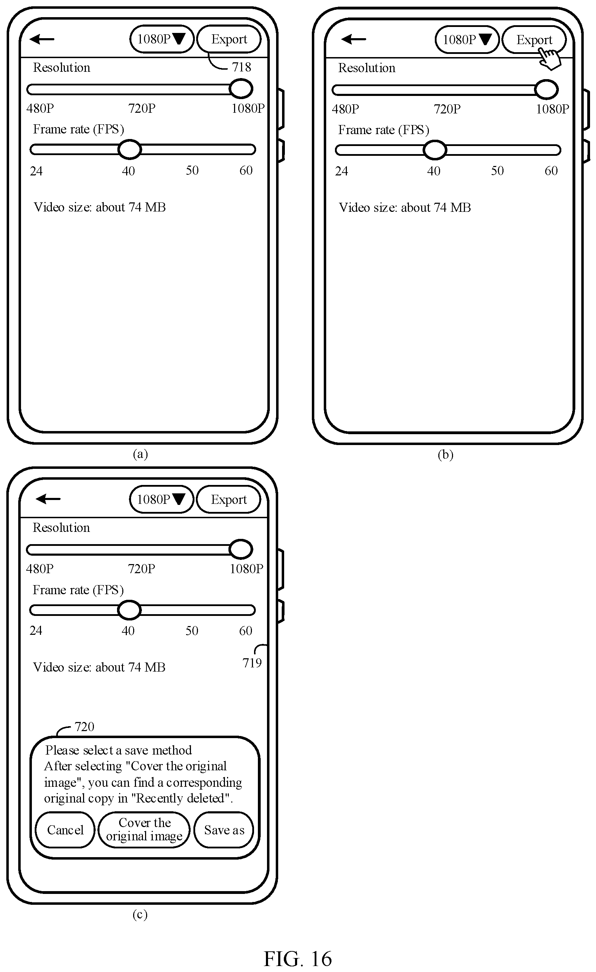

For example, the second prompt box may be a prompt box 720 shown in (c) of FIG. 16; the first storage mode may be a storage mode of "covering an original image"; and the second storage mode may be a storage mode of "save as".

Optionally, for an implementation, refer to related descriptions of (c) in FIG. 16. Details are not described herein again.

Optionally, the detecting a play operation on the to-be-played video includes:
displaying a second display interface, where the second display interface includes a first prompt box, the first prompt box is used to prompt whether to perform the enhancement processing on the to-be-played video, the first prompt box includes a first control, and the first control is used to indicate to perform the enhancement processing on the to-be-played video; and
the determining, in response to the play operation, whether a first parameter of the to-be-played video is less than a first preset threshold includes:
   detecting a first operation on the first control; and
   determining, in response to the first operation, whether the first parameter of the to-be-played video is less than the first preset threshold.

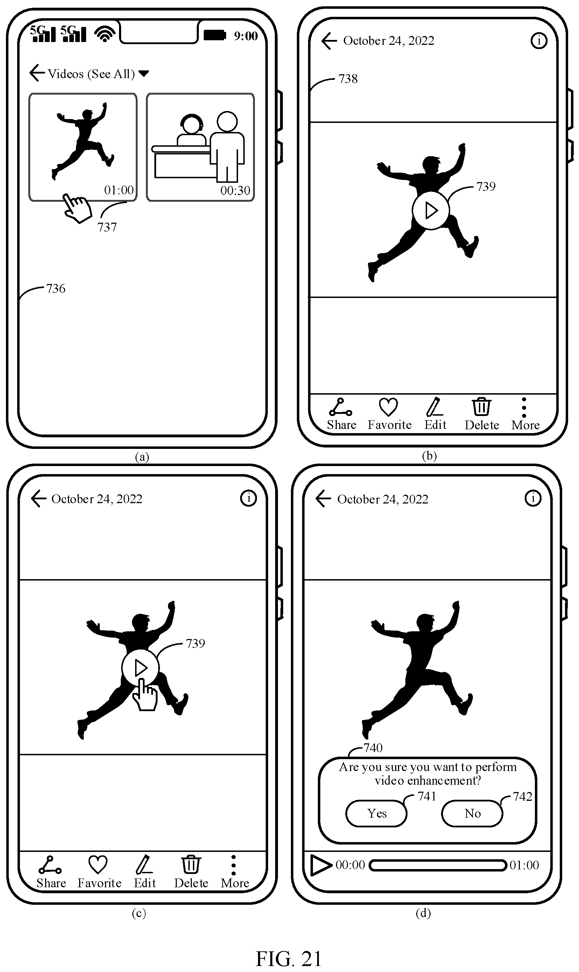

For example, the second display interface may be shown as (d) in FIG. 21, and the first prompt box may be shown as 740 in (d) of FIG. 21. The first control may be a control 741 in the prompt box 740.

Based on the solution of this application, the to-be-played video is obtained; the first display interface is displayed, where the first display interface includes the to-be-played video and a first control, and the first control is used to indicate to perform enhancement processing on the to-be-played video; a first play operation on the first control is detected; it is determined first whether a first parameter of the to-be-played video is less than a first preset threshold, where the first parameter includes a resolution, and a second parameter that is in the first parameter of the to-be-played video and that satisfies a first preset condition is determined, where the first parameter includes at least two of a resolution, a dynamic range, and high-frequency information; if the first parameter is less than the first preset threshold, it is determined whether the second parameter of the to-be-played video satisfies the first preset condition; enhancement processing is performed on the to-be-played video based on the first parameter and/or the second parameter, to generate an enhanced video; and the enhanced video is displayed or saved. It can be understood as: in this embodiment of this application, before image quality enhancement processing is performed on the to-be-played video, the to-be-played video may be analyzed first, to determine a factor that affects the video quality of the to-be-played video. When the factor that affects the video quality of the to-be-played video is determined, image quality enhancement processing is performed on the to-be-played video in a targeted manner, to improve the video quality of the to-be-played video. Compared with an existing manner in which enhancement processing is directly performed on one aspect of the to-be-played video, the solution in this embodiment of this application can intelligently analyze a reason why the video quality of the to-be-played video is poor, to perform image quality enhancement processing on the to-be-played video in a targeted manner, thereby improving the video quality of the to-be-played video.

FIG. 5 is a schematic flowchart of a method for enhancing video image quality according to an embodiment of this application. The method may be performed by the electronic device shown in FIG. 1; and the method 400 includes S401 to S413, and S401 to S413 are described in detail below.

S401: Obtain video data.

Optionally, when obtaining the video data, the electronic device playing the video may obtain video data stored in a video server; or obtain video data stored in a local device. This is not limited in this application.

S402: Parse the video data.

Optionally, when the video data is parsed, the obtained video data may be parsed frame by frame.

For example, a decoder may be invoked, and the decoder may be configured to decompress a digital video.

S403: Determine whether the resolution is less than the first preset threshold. If yes, perform S404; and if no, perform S406.

Optionally, the determining may be performed frame by frame based on parsed original data; it is determined whether a resolution of each frame of original data is less than the first preset threshold; S404 is performed if a resolution of one frame of original data is less than the first preset threshold; and S406 is performed if a resolution of one frame of original data is greater than or equal to the first preset threshold.

Optionally, the first preset threshold may be 360P.

In this embodiment of this application, after the video data is parsed, the resolution of the original data in the video may be preferentially determined. Because the resolution usually has a large impact on image quality of an image, in this embodiment of this application, the resolution may have a high priority in determining the factor that affects the video quality.

S404: Super-resolution algorithm processing.

Optionally, if a resolution of one frame of original data is less than the first preset threshold, super-resolution algorithm processing is performed on the frame of original data; and after super-resolution algorithm processing is performed on the frame of original data, data on which super-resolution processing is performed may be obtained, to improve a resolution of an image in a video.

Optionally, the super-resolution algorithm may include: an interpolation-based method, a reconstruction-based method, or a learning-based method.

The interpolation-based method refers to first estimating relative motion information between frames of images, to obtain pixel values of a high-resolution image at sampling points of uneven spacing, then obtaining pixel values of a high-resolution grid through uneven interpolation, and finally, removing blur and reducing noise by using an image restoration technology. The reconstruction-based method refers to studying a representation form of high-resolution details of an image at a low resolution, and establishing a correspondence between the high-resolution details and the low-resolution details. The mapping relationship is expressed based on a model. The learning-based method refers to calculating prior knowledge between a high resolution and a low resolution based on a training sample, and establishing a mapping model between the high resolution and the low resolution.

Optionally, the super-resolution algorithm of the reconstruction-based method may include: super-resolution reconstruction based on a single image and super-resolution reconstruction based on an image sequence.

The super-resolution reconstruction based on a single image refers to searching for, by using a prior model or a matching mechanism, detail content matching a to-be-processed image from a given external resource, and adding the detail content to an original image, to improve a resolution. The super-resolution reconstruction based on an image sequence refers to performing complementary estimation on mutual overlapping information of a plurality of low-resolution images, to obtain detailed content of an image.

Optionally, super-resolution processing on the original data may be implemented based on a convolutional neural network (CNN) or a generative adversarial network (GAN); and for the implementation, further refer to related descriptions of super-resolution algorithm processing in Patent Application No. 202210599727.0.

S405: Display on a display screen.

For example, data on which super-resolution processing is performed is displayed on the display screen, that is, a video on which super-resolution processing is performed is displayed.

In this embodiment of this application, the electronic device playing a video may perform image quality enhancement processing on the video in real time when playing the video, so that the video played on the electronic device is a video on which the image quality enhancement processing is performed, to improve video quality, thereby improving watching experience of the user.

S406: Determine whether it belongs to the preset scenario. Perform S407 or S410 if it belongs to the preset scenario. Perform S413 if it does not belong to the preset scenario.

It should be understood that the preset scenario may include scenario 1 and scenario 2. When it is determined, by using S406, that a frame of original data belongs to the preset scenario, if the frame of original data belongs to scenario 1 in the preset scenarios, perform S407. If the frame of original data belongs to scenario 2 in the preset scenarios, perform S410.

It should be noted that, scenario 1 refers to a photographing scenario in which a bright light area and a dark light area exist.

For example, scenario 1 includes: an indoor light source photographing scenario, a night scene photographing scenario, a sky photographing scenario, or a glass wall (for example, a glass wall with high saturation).

For example, the night scene photographing scenario includes: a light source signboard in a night scene.

For example, the sky photographing scenario includes: a sunny day and a setting sun.

It should be understood that scenario 1 is a photographing scenario in which contrast enhancement needs to be performed. If a frame of original data belongs to scenario 1, contrast enhancement processing may be performed on the frame of original data, to enhance a dynamic range of the original data.

It should be noted that, scenario 2 is a scenario in which texture information is rich. It can be understood as: scenario 2 is rich in high-frequency information.

For example, scenario 2 includes: scenery, building, porcelain crafts, artware, hand-crafted goods, and the like. The scenery may include a green plant, a greenfield, a forest, and the like. The porcelain crafts may include an exhibition having rich texture details, and the like. The artware may include a specifically fine-decorated hair accessory, and the like.

It should be understood that scenario 2 is a photographing scenario in which detail enhancement needs to be performed. If a frame of original data belongs to scenario 2, detail enhancement processing may be performed on the frame of original data, to improve detail information of the original data.

Optionally, a tag of each frame of original data may be identified through scenario identification. It is determined based on the tag of the original data whether a frame of original data belongs to a first preset scenario.

For example, if the tag of the original data is the same as a tag of the first preset scenario, it indicates that the original data belongs to the first preset scenario. If the tag of the original data is different from the tag of the first preset scenario, it indicates that the original data does not belong to the first preset scenario.

S407: Determine whether the histogram satisfies a first condition. Perform S408 if the histogram satisfies the first condition; and perform S409 if the histogram does not satisfy the first condition.

Optionally, when the resolution of the original data is greater than or equal to the first preset threshold, which can be understood as, when a reason affecting video quality is not a problem of the resolution, first, scenario identification is performed on the original data, and if an image tag of the original data is a tag of scenario 1, for example, the scenario tag is lamp light, sky, or the like, the reason affecting video quality may be the dynamic range. In this case, histogram statistics may be performed on an image corresponding to the original data, and it is determined based on a histogram statistics result whether the reason affecting image quality is the dynamic range. If yes, perform S408. Contrast enhancement algorithm processing is performed, contrast of the image in the video is improved, and then the image is transmitted to a display screen for display. If not, perform S409. No processing is performed on the image corresponding to the original data, and the original data is directly transmitted to the display screen for display.

For example, a histogram may be obtained based on original data. It is determined, based on the histogram, whether the first condition is satisfied.

It should be understood that the histogram may be used for describing grayscale distribution of an entire image. For example, an x-axis of the histogram may represent a grayscale value (0 to 255); and a y-axis of the histogram may represent a quantity of pixels of a same grayscale value in an image. Therefore, brightness, grayscale distribution, and contrast of an image may be intuitively displayed by using the histogram.

Optionally, the first condition may be that a ratio of a middle value area [X1, X2] of the histogram is greater than a threshold 1.

For example, the first condition may be that a ratio of a middle area [100, 155] of the histogram is greater than 0.6.

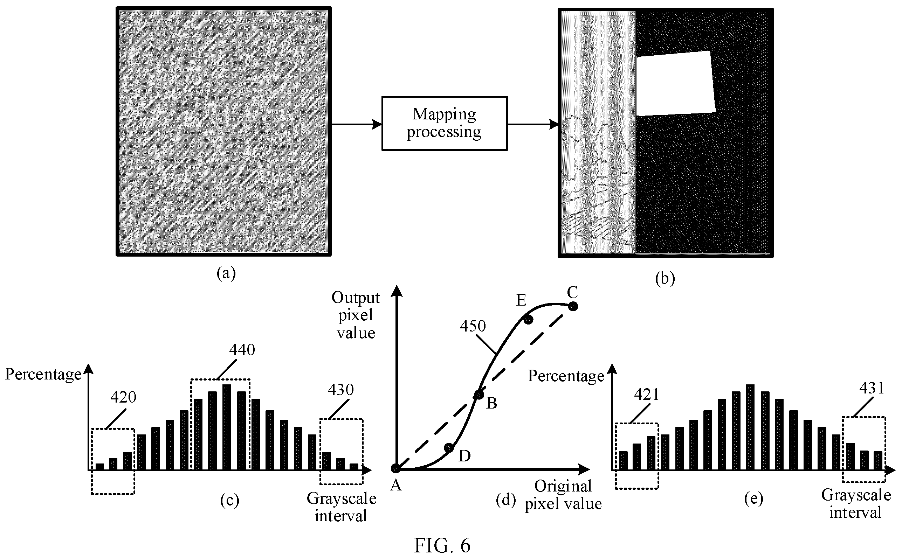

For example, a histogram of the original data may be shown in (c) of FIG. 6. A grayscale area 420 indicates a quantity of pixels in a low grayscale area in the histogram. A grayscale area 430 indicates a quantity of pixels in a high grayscale area in the histogram. A grayscale area 440 indicates a quantity of pixels in a middle grayscale area in the histogram. The first condition may be that a ratio of a quantity of all pixels in the grayscale area 440 to a total quantity of pixels is greater than 0.6.

It should be noted that, generally, a smaller grayscale value indicates a darker pixel in the luminance space. A larger grayscale value indicates a brighter pixel in the luminance space.

It should be understood that, generally, a larger proportion of a middle area of a grayscale value in a histogram of one frame of image indicates a larger quantity of pixels in a middle grayscale in the entire image. That is, a quantity of pixels in an excessively low grayscale or an excessively high grayscale in the entire image is small, and in this case, the entire image has a problem that an overall image is gray and lacks transparency. Therefore, contrast enhancement processing needs to be performed on the image.

S408: Contrast enhancement algorithm processing.

It should be understood that a smaller quantity of pixels in a low grayscale area in the histogram of the original data indicates a smaller quantity of dark pixels in a luminance space; a smaller quantity of pixels in a high grayscale area in the histogram of the original data indicates a smaller quantity of bright pixels in the luminance space; and smaller quantities of dark pixels and bright pixels in the original data indicate low contrast in the image corresponding to the original data. It can be understood as: the image presents a gray display state and cannot display a bright image area and a dark image area. For example, as shown in (a) of FIG. 6, contrast enhancement algorithm processing is performed on the original data, to obtain data after contrast enhancement processing, that is, data with an enhanced dynamic range, so that a bright area and a dark area can be displayed in the image, as shown in (b) of FIG. 6.

Optionally, mapping processing may be performed on the original data by using a one-dimensional lookup table, to obtain the data with the enhanced dynamic range.

For example, the one-dimensional lookup table may be a curve or a broken line, or a table, a function, or the like. Mapping processing may be performed on Y-path data of the original data by using a one-dimensional curve, that is, conversion processing is performed on the Y-path data of the original data, to obtain Y-path data with an enhanced dynamic range.

For example, an example in which a one-dimensional lookup table is used as a curve is used for description. For example, as shown in FIG. 6, mapping processing may be performed on the Y-path data of the original data, to obtain data after contrast enhancement processing. (a) in FIG. 6 represents an image corresponding to the original data, (b) in FIG. 6 represents an image corresponding to the data on which the contrast enhancement processing is performed. (c) in FIG. 6 represents a histogram of the original data, (d) in FIG. 6 represents a curve 450 used for mapping processing, and (e) in FIG. 6 represents a histogram of the data on which the contrast enhancement processing is performed. Pixels represented by the Y-path data of the original data are multiplied by using the curve 450, to obtain the data on which the contrast enhancement processing is performed.

It should be understood that a function of the curve 450 is to enable a dark area of the Y-path data in the original data to be darker, and enable a bright area of the Y-path data in the original data brighter, to improve contrast of the Y-path data of the original data.

In this embodiment of this application, when the contrast enhancement algorithm processing is performed on the original data, the contrast enhancement algorithm processing may be performed on only the Y-path data in the original data. On the one hand, because the method for enhancing video image quality provided in this embodiment of this application may be applied to real-time processing, performing the contrast enhancement algorithm processing on only the Y-path data in the original data can improve processing efficiency of the electronic device in enhancing video image quality. On the other hand, because eyes of a user are usually more sensitive to brightness, the contrast enhancement algorithm processing is performed on only the Y-path data in the original data, to obviously improve video watching experience of the user.

For example, as shown in (d) of FIG. 6, the curve 450 includes point A, point B, point C, point D, and point E. Coordinates of point A are (0, 0); coordinates of point B are (127, 127); coordinates of point C are (255, 255); coordinates of point D are (50, d); and coordinates of point E are (200, e), where d=50*(1-0.5*R); and e=200+55*0.5*R. R represents a proportion of a middle grayscale value interval [100, 155] in the histogram of the original data. It can be seen from a relationship among d, e, and R that, R is inversely proportional to and directly proportional to d. Three points of A, D, and B are fitted, and three points of the B, E, and C are fitted by using a broken line or a quadratic function, to obtain the curve 450.

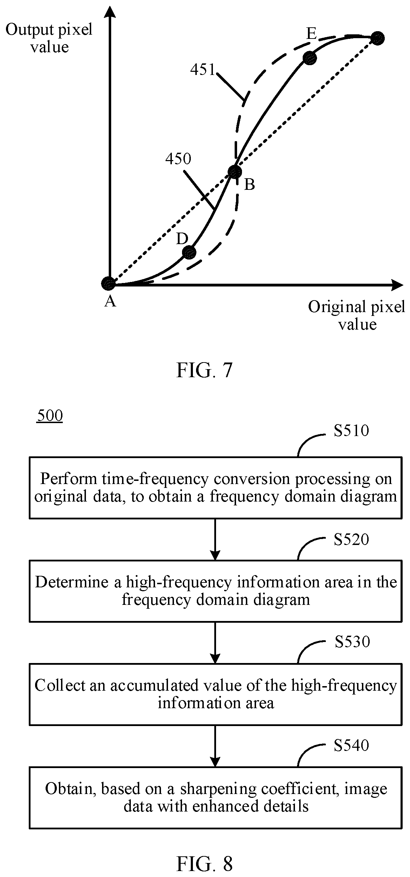

Optionally, with reference to (c) of FIG. 6 and FIG. 7, a smaller quantity 420 of pixels in a low grayscale area in the histogram and/or a smaller quantity 430 of pixels in a low grayscale area in the histogram indicate/indicates a larger curvature of a curve for performing the contrast enhancement algorithm processing. It can be understood as: a smaller quantity of pixels in a low grayscale interval and/or a smaller quantity of pixels in a high grayscale interval indicate/indicates a larger coefficient (or a higher degree) by which contrast enhancement needs to be performed on the original data, and a larger curvature of a corresponding mapping curve. For curve 450 and curve 451 shown in FIG. 7, a curvature of curve 451 is larger than a curvature of curve 450.

Optionally, the contrast enhancement algorithm processing may be tone mapping (Tone mapping). The tone mapping is used to map a color from an original tone (for example, a low dynamic range) to a target tone (for example, a high dynamic range).

In this embodiment of this application, when the resolution of the original data in the video is greater than or equal to a first resolution threshold, and the photographing scenario belongs to scenario 1 in the preset scenarios, that is, the photographing scenario of the original data includes a bright light area and a dark light area, histogram distribution determining may be performed on the original data. When the histogram distribution satisfies the first condition, that is, a quantity of pixels in the middle grayscale area in the histogram is greater than threshold 1, contrast enhancement algorithm processing is performed on the original data, to enhance the contrast of the original data and enhance the dynamic range of the original data.

In this embodiment of this application, when the contrast enhancement algorithm processing is performed on the original data, a degree of performing the contrast enhancement algorithm processing on the original data (for example, determining mapping and removal) may be determined based on an image classification tag (for example, scenario 1) corresponding to the original data and histogram distribution (for example, the histogram satisfies the first condition) of an image corresponding to the original data, to enhance a dynamic range of the image corresponding to the original data.

Optionally, data, on which the contrast enhancement algorithm processing is performed, in the YUV color space may be converted into the RGB color space, and is transmitted to a display screen for display.

Optionally, the data, on which the contrast enhancement algorithm processing is performed, in the YUV color space may be converted into a storage format and stored in the electronic device. During playing, the data in the storage format may be decoded, and the decoded data in the YUV color space is converted into the RGB color space, and is transmitted to a display screen for display.

For example, the storage format includes, but is not limited to: mp4, mkv, wmv, avi, and the like.

Optionally, when the data on which the contrast enhancement algorithm processing is performed is stored, the data may be locally stored in the electronic device; or the data on which the adaptive sharpness algorithm processing is performed may be sent to a cloud server, and automatic update and deletion processing is periodically performed on the data.

S409: Output the original data.

For example, when a resolution of one frame of original data is greater than or equal to the first preset threshold and belongs to scenario 1 in the preset scenarios, and histogram distribution does not satisfy the first condition, the original data may be transmitted to a display screen for display.

It should be understood that the original data may be data obtained after the video data is parsed in S402. For example, the original data may be data in a YUV color space corresponding to the video data.

S410: Determine whether frequency distribution satisfies a second condition. Perform S411 if the frequency distribution satisfies the second condition. Perform S412 if the frequency distribution does not satisfy the second condition.

Optionally, when the resolution of the original data is greater than or equal to the first preset threshold, which can be understood as, when a reason affecting video quality is not a problem of the resolution, first, scenario identification is performed on the original data, and if an image tag of the original data is a tag of scenario 2, for example, the scenario tag is scenery, building, or the like, the reason affecting video quality may be blurring details in the image. In this case, time-frequency conversion may be performed on the original data, to obtain a frequency domain diagram, to determine, by using the frequency domain diagram, whether the reason affecting image quality is blurring details. If yes, perform S411. The adaptive sharpness algorithm processing is performed to enhance detail information of the image in the video, and then the image is transmitted to a display screen for display. If not, perform S412. No processing is performed on the image corresponding to the original data, and the original data is directly transmitted to the display screen for display.

Optionally, when the resolution of the original data is greater than or equal to the first preset threshold and belongs to scenario 2 in the preset scenarios, it is determined whether frequency distribution of the original data satisfies the second condition.

It should be understood that, generally, less high-frequency information in a frequency domain diagram of one frame of image indicates less detail information in the entire image. When the high-frequency information is less, a problem of blurring detail information occurs in the image. Therefore, detail information enhancement processing (for example, adaptive sharpening algorithm processing) needs to be performed on the image.

Optionally, the second condition may be that an accumulated value of a high-frequency part in the frequency domain diagram is less than threshold 2.

For example, the second condition may be that the accumulated value of the high-frequency part in the frequency domain diagram is less than 7000000.

For example, a first area and a second area may be determined in the frequency domain diagram. The first area is a low-frequency part, that is, an image area that is of 1/16 of a center of the frequency domain diagram. It can be understood as: if a size of the frequency domain diagram is L*S, a center of the first area is the same as the center of the frequency domain diagram, and the first area is an image area of 1/4L*1/4S; a part other than the first area in the frequency domain diagram is the second area; pixel values of each pixel in the second area are traversed, and all values are added to obtain an accumulated value of the high-frequency part; and sumFFT=sum(pixel Value), where sumFFT represents the accumulated value of the high-frequency part.

S411: Adaptive sharpness algorithm processing.

Optionally, when a resolution of one frame of original data is greater than or equal to the first preset threshold and belongs to scenario 2 in the preset scenarios, and frequency distribution satisfies the second condition, adaptive sharpness algorithm processing may be performed on the original data, to obtain data with added details.

It should be understood that the adaptive sharpness algorithm processing is to enhance detail information in an image. When the original data belongs to scenario 2 in the preset scenarios, the photographing scenario usually includes rich detail information. The detail information of the image in the video can be enhanced by performing adaptive sharpness algorithm processing on the original data.

Optionally, sharpening processing may be performed on a detail part of the image by using a Laplace sharpening algorithm, to obtain an image with enhanced details. An enhancement coefficient of the Laplace sharpening algorithm may be determined based on a frequency domain statistics result.

S412: Output the original data.

For example, when a resolution of one frame of original data is greater than or equal to the first preset threshold and belongs to scenario 2 in the preset scenarios, and frequency distribution does not satisfy the second condition, the original data may be transmitted to a display screen for display.

It should be understood that the original data may be data obtained after the video data is parsed in S402. For example, the original data may be data in a YUV color space corresponding to the video data.

S413: Output the original data.

For example, when a resolution of one frame of original data is greater than or equal to the first preset threshold and does not belong to the preset scenario, the original data may be transmitted to a display screen for display.

It should be understood that the original data may be data obtained after the video data is parsed in S402. For example, the original data may be data in a YUV color space corresponding to the video data.

In this embodiment of this application, before the image quality enhancement processing is performed on the original data of the video, the original data of the video may be analyzed first, to determine a factor that affects video quality of the original data of the video. When the factor that affects video quality of the original data of the video is determined, image quality enhancement processing is further performed on the original data of the video in a targeted manner, to improve video quality of the original data of the video. Compared with an existing manner in which enhancement processing is directly performed on one aspect of original data of a video, the solution in this embodiment of this application can intelligently analyze a reason why the video quality of the original data of the video is poor, to perform image quality enhancement processing on the original data of the video in a targeted manner, thereby improving the video quality of the video.

FIG. 8 is a schematic flowchart of an adaptive sharpness algorithm processing method according to an embodiment of this application. The method 500 includes S510 to S540. S510 to S540 are described in detail below.

S510: Perform time-frequency conversion processing on original data, to obtain a frequency domain diagram.

Optionally, the time-frequency conversion processing refers to a processing process of conversion from a time domain to a frequency domain. The time-frequency conversion processing may include: Cosine transform, Fourier transform, fast Fourier transform, or the like.

For example, the original data may be data in a YUV color space, and time-frequency conversion processing may be performed on the data in the YUV color space, to obtain a frequency domain diagram corresponding to the original data.

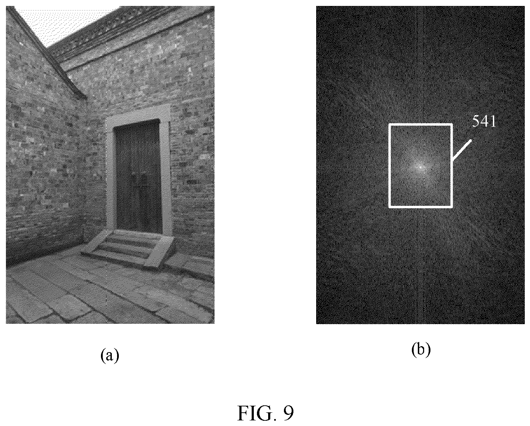

For example, (a) of FIG. 9 is an image corresponding to the original data; and (b) of FIG. 9 is the frequency domain diagram corresponding to original data.

S520: Determine a high-frequency information area in the frequency domain diagram.

For example, a center of the frequency domain diagram may be determined, and an image area with a length and a width respectively being 1/4 of the frequency domain diagram is determined as a low-frequency information area by using the center of the frequency domain diagram as a center of the high-frequency information area. For example, an area 541 shown in (b) of FIG. 9 is the low-frequency information area; and a part other than the low-frequency information area in the frequency domain diagram is the high-frequency information area.

It should be understood that the frequency domain diagram which is closer to a central point indicates a lower frequency domain; and a brighter white central point indicates a larger proportion in a corresponding frequency domain.

S530: Collect an accumulated value of the high-frequency information area.

For example, in the high-frequency information area, pixel values of each pixel are traversed, and all values are added to obtain an accumulated value of the high-frequency information; and sumFFT=sum(pixel Value), where sumFFT represents the accumulated value of the high-frequency information.

S540: Obtain, based on a sharpening coefficient, image data with enhanced details.

For example, Laplace sharpening coefficient R1=-K*sumFFT+b, where K and b are preset thresholds. For example, K may refer to FFTslope; and b may refer to FFTintercept.

For example, a value of FFTslope may be: 1/4000000; and a value of FFTintercept may be 2.

Optionally, Laplace sharpening coefficient R1 may be limited in a preset range [K1, K2]. If the value of R1 exceeds the preset range, a maximum value of K1 is used; or a minimum value of K2 is used. For example, if R1 is less than K1, the value of R1 is K1; and if R1 is greater than K2, the value of R1 is K2.

In this embodiment of this application, Laplace sharpening coefficient R1 may be limited in the preset range [K1, K2], to avoid a strong sharpening degree caused by large Laplace sharpening coefficient R1; or to avoid a weak sharpening degree caused by small Laplace sharpening coefficient R1. Sharpness processing is performed on the original data of the video based on Laplace sharpening coefficient R1, to improve video quality.

Optionally, image data on which sharpening processing is performed may be obtained based on the original data, sharpening coefficient R1, and a second-order gradient image of the original data, that is, the image data with enhanced details.

It should be understood that the second-order gradient image of the original data is a derivation of a grayscale change of an image corresponding to the original data, and edge detail information in the image can be highlighted. More edge detail information can be obtained based on the second-order gradient image of the original data. Detail enhancement processing may be performed on the original data by using the edge detail information, to enhance detail information in the original data.

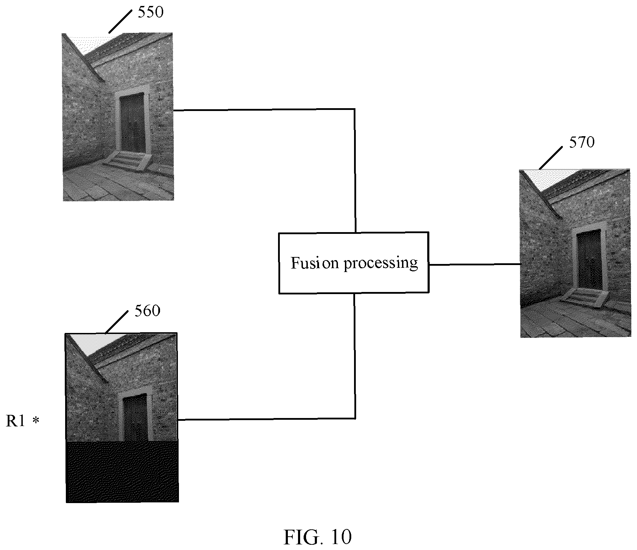

Optionally, as shown in FIG. 10, image 550 is an image of an original data object; image 560 is the second-order gradient image of the original data; and image 570 is an image corresponding to the image data with enhanced details. Laplace sharpening coefficient R1 is multiplied with image 560, and is fused with image 550, to obtain image 570.

For example, image data with enhanced details=original data+R1*second-order gradient image of original data.

In this embodiment of this application, when adaptive sharpness algorithm processing is performed on the original data, adaptive sharpness algorithm processing may be performed on only Y-path data in the original data. On the one hand, because the method for enhancing video image quality provided in this embodiment of this application may be applied to real-time processing, performing the adaptive sharpness algorithm processing on only the Y-path data in the original data can improve processing efficiency of the electronic device in enhancing video image quality. On the other hand, because eyes of a user are usually more sensitive to brightness, the adaptive sharpness algorithm processing is performed on only the Y-path data in the original data, to obviously improve video watching experience of the user.

Optionally, detail-enhanced data on which the adaptive sharpness algorithm processing is performed may be transmitted to a display screen for display, to display an image with enhanced details.

For example, data, on which the adaptive sharpness algorithm processing is performed, in a YUV color space may be converted into an RGB color space, and is transmitted to a display screen for display.

Optionally, the data, on which the adaptive sharpness algorithm processing is performed, in the YUV color space may be converted into a storage format and stored in the electronic device. During playing, the data in the storage format may be decoded, and the decoded data in the YUV color space is converted into the RGB color space, and is transmitted to a display screen for display.

For example, the storage format includes, but is not limited to: mp4, mkv, wmv, avi, and the like.

Optionally, when the data on which the adaptive sharpness algorithm processing is performed is stored, the data may be locally stored in the electronic device; or the data on which the adaptive sharpness algorithm processing is performed may be sent to a cloud server, and automatic update and deletion processing is periodically performed on the data.

In this embodiment of this application, when the adaptive sharpness algorithm processing is performed on the original data, a degree of performing the adaptive sharpness algorithm processing on the original data may be determined based on an image classification tag (for example, scenario 2) corresponding to the original data and high-frequency information distribution (for example, frequency distribution satisfies a second condition) of an image corresponding to the original data, to enhancing detail information in the image corresponding to the original data.

S412: Output the original data.

For example, when a resolution of one frame of original data is greater than or equal to the first preset threshold and belongs to scenario 2 in the preset scenarios, and frequency distribution does not satisfy the second condition, the original data may be transmitted to a display screen for display.

It should be understood that the original data may be data obtained after the video data is parsed in S402. For example, the original data may be data in a YUV color space corresponding to the video data.

S413: Output the original data.

For example, when a resolution of one frame of original data is greater than or equal to the first preset threshold and does not belong to the preset scenario, the original data may be transmitted to a display screen for display.

It should be understood that the original data may be data obtained after the video data is parsed in S402. For example, the original data may be data in a YUV color space corresponding to the video data.

Optionally, in the foregoing determining steps, determining may be performed based on each frame of data, and the determining steps include: S403, S406, S407, or S410.

For example, performing S403 based on each frame of data is used as an example for description. For example, it is assumed that 10 frames of original data, that is, a 1^{st} frame of original data to a 10^{th} frame of original data, are obtained after the video data is parsed. It may be separately determined whether a resolution of each of the 1^{st} frame of original data to the 10^{th} frame of original data is less than a first preset threshold. If a resolution of a frame of original data is less than the first preset threshold, S404 is performed on the frame of original data. If a resolution of a frame of original data is greater than or equal to the first preset threshold, S406 is performed on the frame of original data.

Optionally, in the foregoing determining steps, the original data may be determined based on a preset quantity of frames. It can be understood as: the original data is determined at intervals of preset duration. The determining steps include: S403, S406, S407, or S410.

For example, performing S403 based on each frame of data is used as an example for description. For example, if 20 frames of data are obtained after the video data is parsed, it may be determined based on a 1^{st} frame of original data whether a resolution is less than the first preset threshold; S404 is performed on the 1^{st} frame of original data to a 10^{th} frame of original data if the resolution of the 1^{st} frame of original data is less than the first preset threshold; and S406 is performed on the 1^{st} frame of original data to the 10^{th} frame of original data if the resolution of the 1^{st} frame of original data is greater than or equal to the first preset threshold. Similarly, it may be determined based on an 11^{th} frame of original data whether a resolution is less than the first preset threshold; S404 is performed on the 11^{th} frame of original data to a 20^{th} frame of original data if the resolution of the 11^{th} frame of original data is less than the first preset threshold; and S406 is performed on the 11^{th} frame of original data to the 20^{th} frame of original data if the resolution of the 11^{th} frame of original data is greater than or equal to the first preset threshold.

Optionally, a descending order of priorities of factors affecting video quality in S401 to S413 may be: a video definition (for example, a resolution of original data), a video dynamic range, and blurring details of a video.

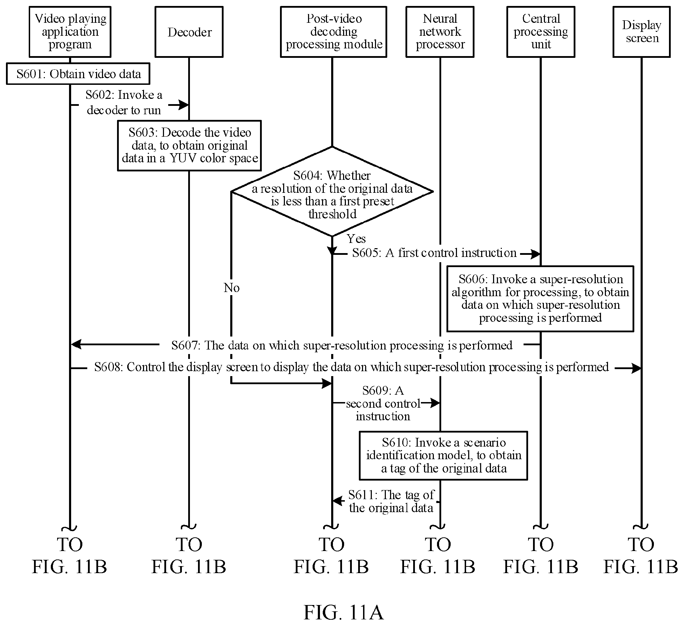

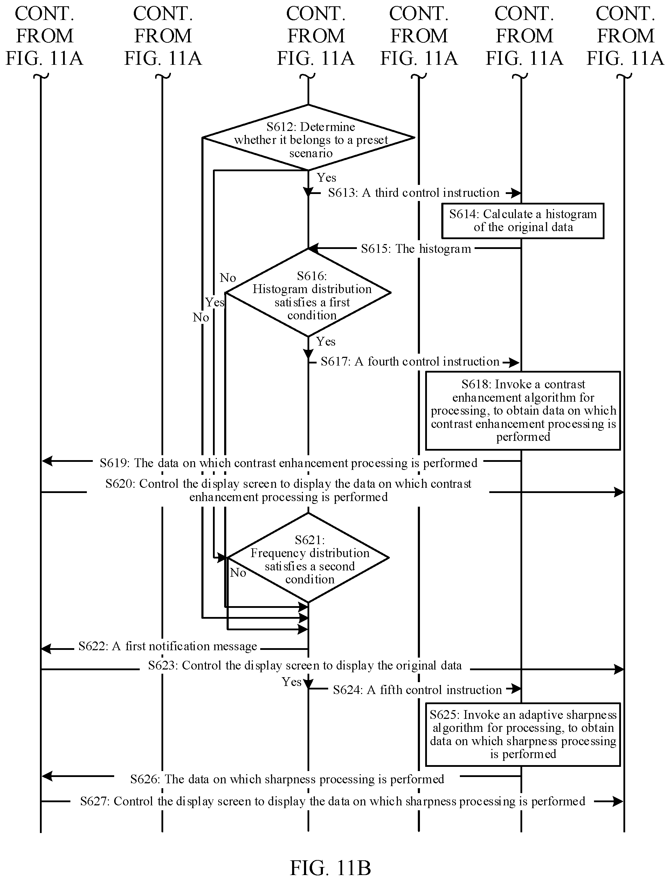

Optionally, the electronic device may include a video playing application program, a decoder, a post-video decoding processing module, a neural network processor, a central processing unit, or a display screen. With reference to FIG. 11A and FIG. 11B, the following describes an interactive flowchart of a method for enhancing video image quality according to an embodiment of this application. The method may be performed by the electronic device shown in FIG. 1; and the method includes S601 to S627, and S601 to S627 are described in detail below.

S601: A video playing application program obtains video data.

Optionally, the video playing application program may be a gallery application program; or the video playing application program may be a third-party video playing application program. This is not limited in this application.

S602: The video playing application program invokes a decoder to run.

For example, the video playing application program may send a first instruction to the decoder, and the first instruction is used to run the decoder.

S603: The decoder is configured to decode the video data, to obtain original data in a YUV color space.

Optionally, the decoder may be configured to decompress a digital video.

Optionally, the decoder may send the original data to a post-video decoding processing module.

S604: The post-video decoding processing module is configured to determine whether a resolution of the original data is less than a first preset threshold. If yes, perform S605; and if no, perform S609.

It should be understood that for an implementation of S604, refer to related descriptions of S403 in FIG. 5. Details are not described herein again.

Optionally, the post-video decoding processing module may be located at a camera application abstraction layer in the electronic device, as shown in FIG. 2.

S605: The post-video decoding processing module is configured to send a first control instruction to a central processing unit.

Optionally, when a resolution of original video is less than the first preset threshold, the post-video decoding processing module is configured to send the first control instruction to the central processing unit; and the first control instruction is used for instructing the central processing unit to run a super-resolution processing algorithm.

Optionally, in a possible implementation, if the super-resolution processing algorithm uses a neural network model, the post-video decoding processing module may be configured to send a control instruction to a neural network processor, so that the neural network controller executes the super-resolution processing algorithm. This is not limited in this application.

S606: The central processing unit is configured to invoke the super-resolution algorithm for processing, to obtain data on which super-resolution processing is performed.

Optionally, the central processing unit may be configured to perform super-resolution algorithm processing on the original data. For a specific implementation, refer to related descriptions of S404 in FIG. 5. Details are not described herein again.

S607: The central processing unit is configured to send the data on which super-resolution processing is performed to the video playing application program.

S608: The video playing application program is configured to control a display screen to display the data on which super-resolution processing is performed.

For example, the video playing application program may be configured to send a control instruction to the display screen, where the control instruction is used to instruct the display screen to display the data on which super-resolution processing is performed. That is, a video on which super-resolution processing is performed is displayed.

S609: The post-video decoding processing module is configured to send a second control instruction to the neural network processor.

Optionally, when the resolution of the original video is greater than or equal to the first preset threshold, the post-video decoding processing module is configured to send the second control instruction to the neural network processor; and the second control instruction is used to instruct the neural network controller to identify a scenario tag of the original data.

S610: The neural network processor is configured to invoke a scenario identification model, to obtain the tag of the original data.

For example, the scenario identification model may be a classification model, and the scenario classification tag of the original data may be obtained by inputting the original data to the classification model.

S611: The neural network processor is configured to send the tag of the original data to the post-video decoding processing module.

S612. The post-video decoding processing module is configured to determine whether it is belongs to a preset scenario. If yes, perform S613 or S621; and if no, perform S622.

For example, the preset scenario may include scenario 1 and scenario 2. S613 is performed if it is determined, based on the tag of the original data, that the original data belongs to scenario 1; and S621 is performed if it is determined, based on the tag of the original data, that the original data belongs to scenario 2. Optionally, for an implementation, refer to related descriptions of S406 in FIG. 5. Details are not described herein again.

S613: The post-video decoding processing module is configured to send a third control instruction to the central processing unit.

For example, when the resolution of the original data is greater than or equal to the first preset threshold, and the tag of the original data belongs to scenario 1 in the preset scenarios, the post-video decoding processing module is configured to send the third control instruction to the central processing unit. The third control instruction is used for instructing the central processing unit to calculate a histogram of the original data.

S614: The central processing unit is configured to calculate the histogram of the original data.

S615: The central processing unit is configured to send the histogram to the post-video decoding processing module.

S616: The post-video decoding processing module is configured to determine whether histogram distribution satisfies a first condition. Perform S617 if the histogram distribution satisfies the first condition; and perform S622 if the histogram distribution does not satisfy the first condition.

Optionally, for an implementation of S616, refer to related descriptions of S407 in FIG. 5. Details are not described herein again.

S617: The post-video decoding processing module is configured to send a fourth control instruction to the central processing unit.

The fourth control instruction is used for instructing the central processing unit to perform contrast enhancement algorithm processing on the original data.

For example, when the resolution of the original data is greater than or equal to the first preset threshold, the tag of the original data belongs to scenario 1 in the preset scenarios, and the histogram distribution satisfies the first condition, the post-video decoding processing module is configured to send the fourth control instruction to the central processing unit.

S618: The central processing unit is configured to invoke a contrast enhancement algorithm for processing, to obtain data on which contrast enhancement processing is performed.

Optionally, the central processing unit may be configured to perform contrast enhancement algorithm processing on the original data. For a specific implementation, refer to related descriptions of S408 in FIG. 5. Details are not described herein again.

S619: The central processing unit is configured to send the data on which contrast enhancement processing is performed to the video playing application program.

S620: The video playing application program is configured to control a display screen to display the data on which contrast enhancement processing is performed.

For example, the video playing application program may be configured to send a control instruction to the display screen, where the control instruction is used to instruct the display screen to display the data on which contrast enhancement processing is performed. That is, a video with a high dynamic range is displayed.

S621: The post-video decoding processing module is configured to determine whether frequency distribution satisfies a second condition. Perform S624 if the second condition is satisfied; and perform S622 if the second condition is not satisfied.

Optionally, for an implementation of S621, refer to related descriptions of S410 in FIG. 5. Details are not described herein again.

S622: The post-video decoding processing module is configured to send a first notification message to the video playing application program.

For example, when the resolution of the original data is greater than or equal to the first preset threshold, the tag of the original data belongs to scenario 2 in the preset scenarios, and the frequency distribution does not satisfy the second condition, the post-video decoding processing module is configured to send the first notification message to the video playing application program. The first notification message is used for instructing the video playing application program to control the display screen to display the original data. It can be understood as: the video playing application program controls the display screen to display an unprocessed video.

S623: The video playing application program controls the display screen to display the original data.

S624: The post-video decoding processing module is configured to send a fifth control instruction to the central processing unit.

The fifth control instruction is used for instructing the central processing unit to perform adaptive sharpness algorithm processing on the original data.

For example, when the resolution of the original data is greater than or equal to the first preset threshold, the tag of the original data belongs to scenario 2 in the preset scenarios, and the frequency distribution satisfies the second condition, the post-video decoding processing module is configured to send the fifth control instruction to the central processing unit.

S625: The central processing unit is configured to invoke an adaptive sharpness algorithm for processing, to obtain data on which sharpness processing is performed.

Optionally, the central processing unit may be configured to perform adaptive sharpness algorithm processing on the original data. For a specific implementation, refer to related descriptions of S411 in FIG. 5. Details are not described herein again.

S626: The central processing unit is configured to send the data on which sharpness processing is performed to the video playing application program.

S627: The video playing application program is configured to control a display screen to display the data on which sharpness processing is performed.

For example, the video playing application program may be configured to send a control instruction to the display screen, where the control instruction is used for instructing to display the data on which sharpness processing is performed on the display screen. That is, a video with enhanced details is displayed.

Optionally, parts in S601 to S627 that are the same as those in FIG. 5 are applicable to related descriptions in FIG. 5 to FIG. 10. Details are not described herein again.

In this embodiment of this application, before the image quality enhancement processing is performed on the original data of the video, the original data of the video may be analyzed first, to determine a factor that affects video quality of the original data of the video. When the factor that affects video quality of the original data of the video is determined, image quality enhancement processing is further performed on the original data of the video in a targeted manner, to improve video quality of the original data of the video. Compared with an existing manner in which enhancement processing is directly performed on one aspect of original data of a video, the solution in this embodiment of this application can intelligently analyze a reason why the video quality of the original data of the video is poor, to perform image quality enhancement processing on the original data of the video in a targeted manner, thereby improving the video quality of the video.

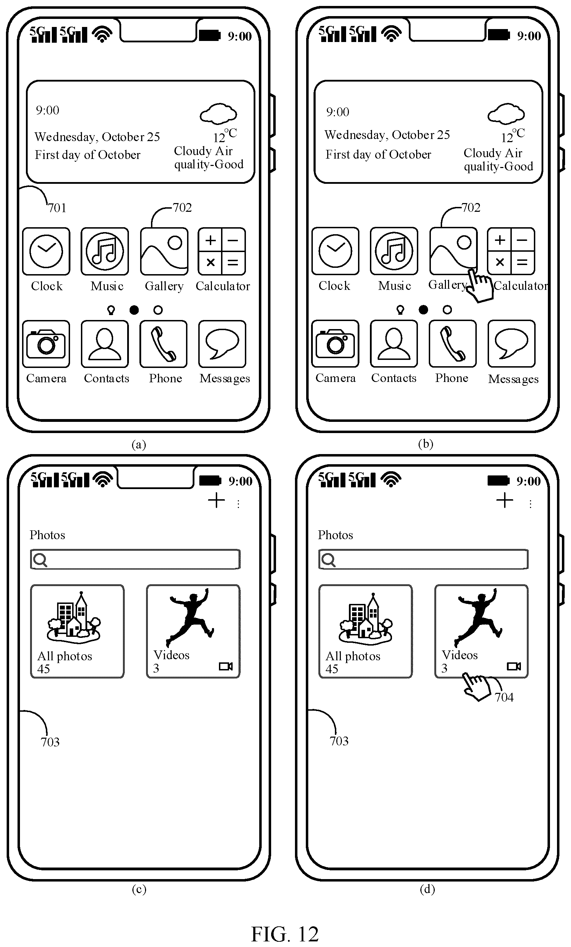

The following uses examples to describe a schematic diagram of an interface according to an embodiment of this application with reference to FIG. 12 to FIG. 22.

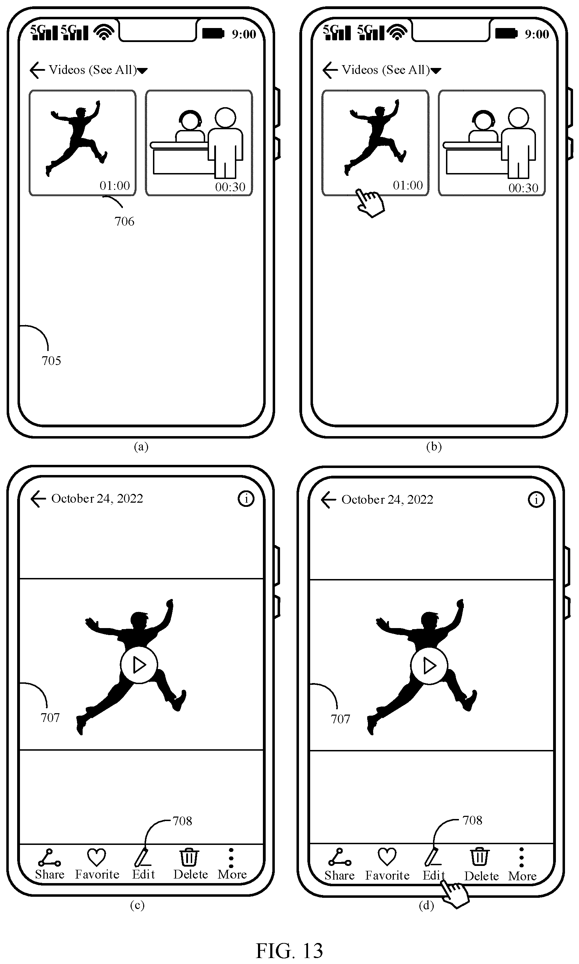

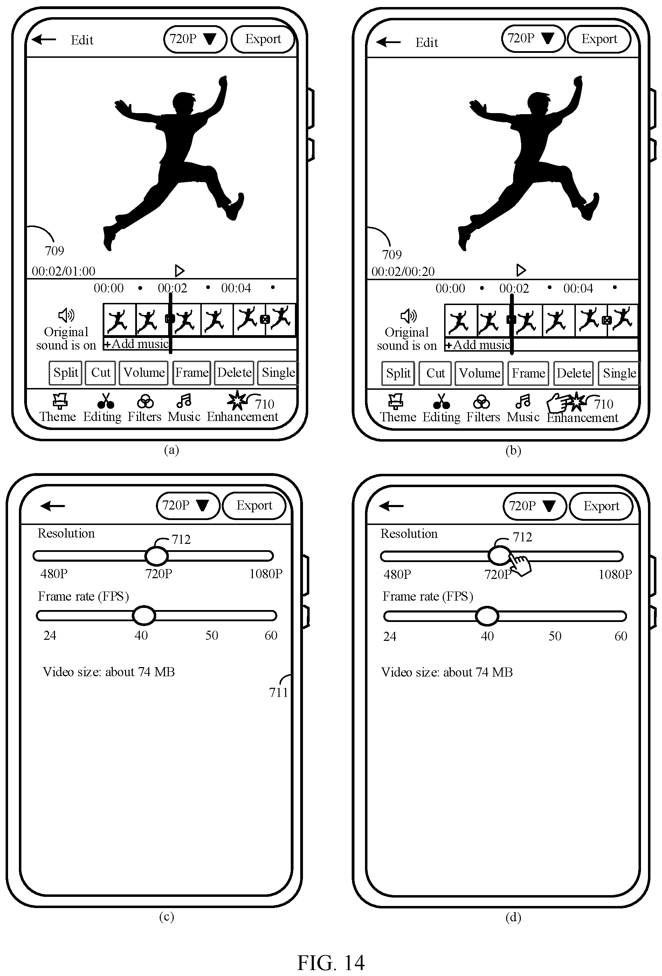

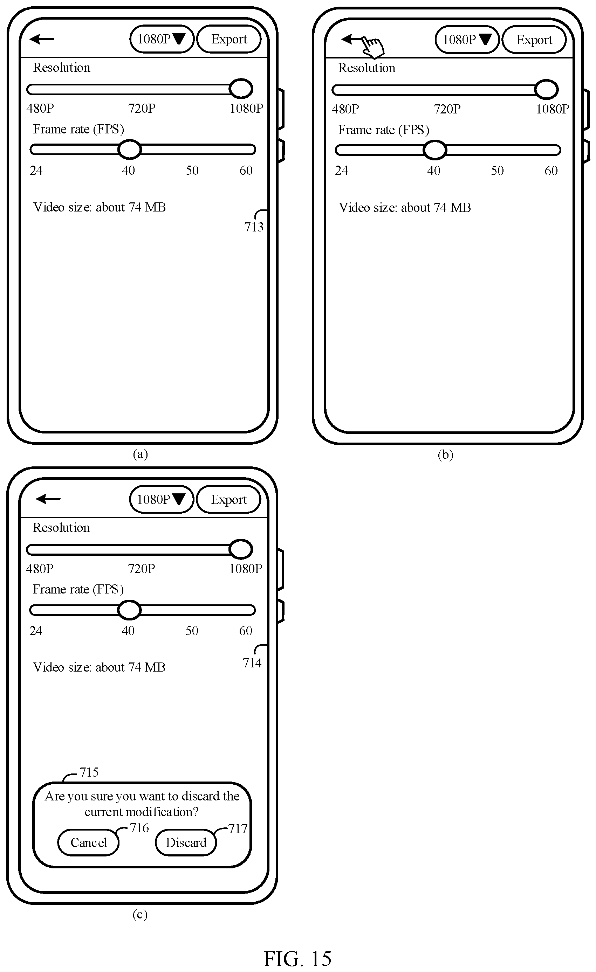

For example, as shown in FIG. 12, a graphical user interface (graphical user interface, GUI) shown in (a) of FIG. 12 is a home screen 701 of an electronic device. The electronic device detects an operation of tapping, by the user, a control 702 of a gallery application program on the home screen, as shown in (b) of FIG. 12. After the electronic device detects that the user taps the control 702 of the gallery application program on the home screen, a gallery display interface 703 shown in (c) of FIG. 12 is displayed. The gallery display interface 703 includes all photo icons and video icons. The electronic device detects an operation of tapping a video icon 704 by the user, as shown in (d) of FIG. 12. After detecting that the user taps the video icon 704, the electronic device displays a video display interface 705, as shown in (a) of FIG. 13. A video icon 706 on the video display interface 705. The electronic device detects an operation of the user tapping the video icon 706, as shown in (b) of FIG. 13. After detecting the operation of tapping the video icon 706, the electronic device displays a play display interface 707. The play display interface 707 includes an edit control 708, as shown in (c) of FIG. 13. The electronic device detects an operation of tapping the edit control 708, as shown in (d) of FIG. 13. After the electronic device detects that the edit control 708 is tapped, an edit display interface 709 is displayed. The edit display interface 709 includes an enhancement processing control 710. The enhancement processing control 710 is configured to perform video enhancement processing, as shown in (a) of FIG. 14. The electronic device detects an operation of tapping the enhancement processing control 710, as shown in (b) of FIG. 14. After detecting the operation of tapping the enhancement processing control 710, the electronic device displays an enhancement edit interface 711. The enhancement edit interface 711 includes a resolution adjustment control 712 and a frame rate adjustment control, as shown in (c) of FIG. 14. The electronic device detects an operation of tapping the resolution adjustment control 712, as shown in (d) of FIG. 14. For example, the electronic device detects an operation of moving the resolution adjustment control 712 from 720P to 1080P, and displays an enhancement edit display interface 713, as shown in (a) of FIG. 15. After editing is completed, the electronic device detects an operation of tapping a return control, as shown in (b) of FIG. 15. After the electronic device detects the operation of tapping the return control, an enhancement edit interface 714 is displayed. The enhancement edit interface 714 includes a prompt box 715, and the prompt box 715 is used for prompting a user "Are you sure you want to discard the current zoom". The prompt box 715 further includes a cancel option 716 and a discard option 717, as shown in (c) of FIG. 15. Optionally, if the electronic device detects an operation of tapping the cancel option 716, the electronic device returns to the enhancement edit display interface 713; and if the electronic device detects an operation of tapping the discard option 717, the electronic device returns to the edit display interface 709.

Optionally, the enhancement edit display interface further includes an export control 718, as shown in (a) of FIG. 16. The electronic device detects an operation of tapping the export control 718, as shown in (b) of FIG. 16. After detecting the operation of tapping the export control 718, the electronic device displays a display interface 719. The display interface 719 includes a prompt box 720. The prompt box 720 is used for prompting how to export a video. For example, the prompt box 720 includes prompt information "Please select a keeping manner" and prompt information "After selecting "Cover the original image", you can find a corresponding original copy in "Recently deleted"". The prompt box 720 further includes a cancel option, an option of covering the original image, and a save as option, as shown in (b) of FIG. 16. Optionally, if the electronic device detects an operation of tapping the cancel option, the electronic device cancels exporting an enhanced video; if the electronic device detects an operation of tapping the option of covering the original image, the electronic device stores the enhanced video in a storage area of an original video, that is, replacing the original video with the enhanced video; and if the electronic device detects an operation of the save as option, the electronic device may display optional save as storage area information.

Optionally, as shown in interface diagrams from FIG. 12 to FIG. 16, the user may enhance image quality of a video by using the edit control in the play display interface, that is, trigger the electronic device to perform the method for enhancing video image quality provided in this embodiment of this application.

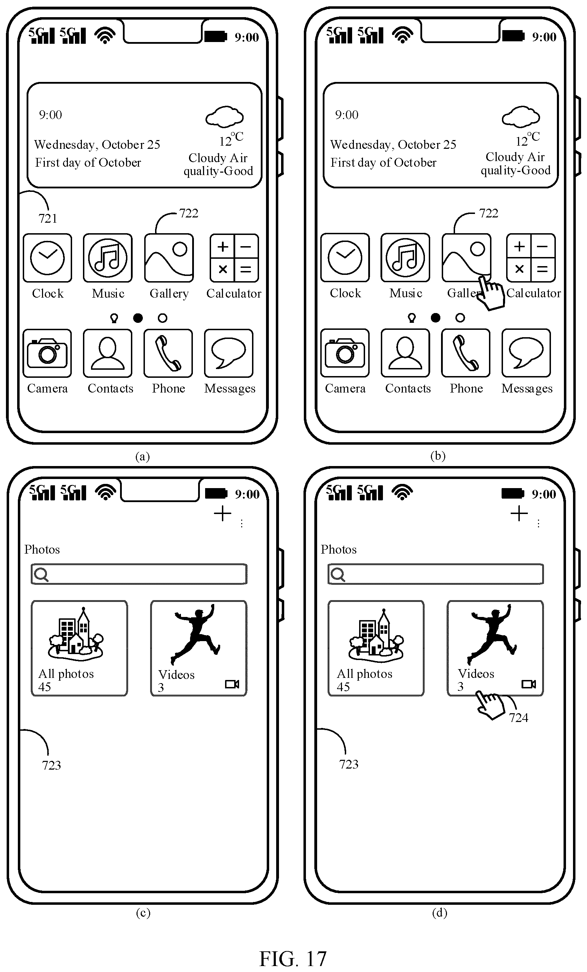

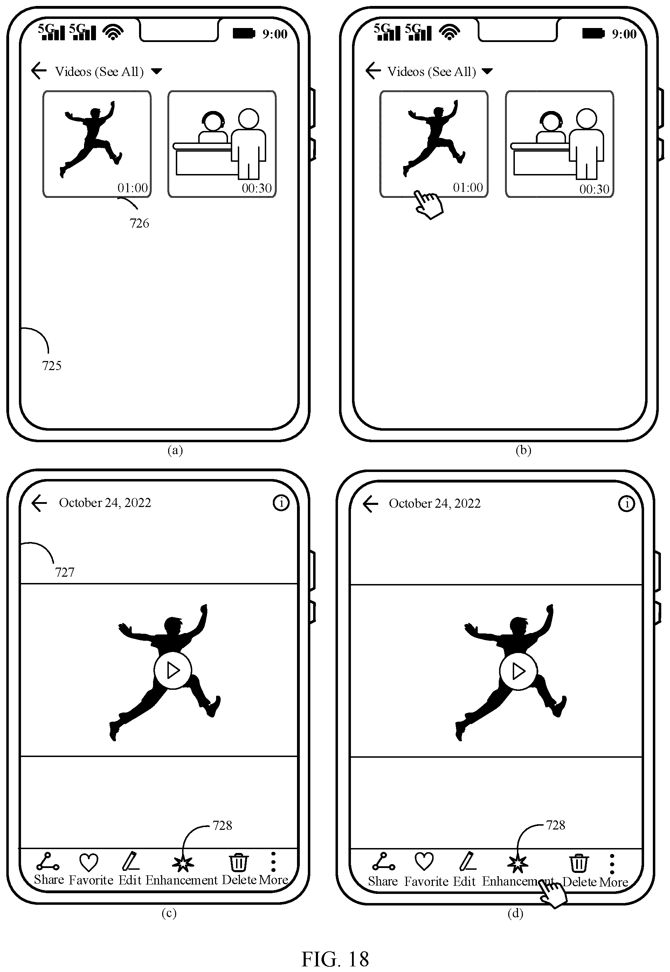

For example, as shown in FIG. 17, a graphical user interface (graphical user interface, GUI) shown in (a) of FIG. 17 is a home screen 721 of an electronic device. The electronic device detects an operation of tapping, by the user, a control 722 of a gallery application program on the home screen, as shown in (b) of FIG. 17. After the electronic device detects that the user taps the control 722 of the gallery application program on the home screen, a gallery display interface 723 shown in (c) of FIG. 17 is displayed. The gallery display interface 723 includes all photo icons and video icons. The electronic device detects an operation of tapping a video icon 724 by the user, as shown in (d) of FIG. 17. After detecting that the user taps the video icon 724, the electronic device displays a video display interface 725, as shown in (a) of FIG. 18. A video icon 726 is displayed on the video display interface 725. The electronic device detects an operation of tapping the video icon 726, as shown in (b) of FIG. 18. After detecting the operation of tapping the video icon 726, the electronic device displays a play display interface 727. The play display interface 727 includes an enhancement processing control 728, as shown in (c) of FIG. 18. The electronic device detects an operation of tapping the enhancement processing control 728, as shown in (d) of FIG. 18. Optionally, after the electronic device detects the operation of tapping the enhancement processing control 728, the electronic device may display an edit display interface, as shown in (a) of FIG. 14. For a subsequent edit operation on the original video, refer to related descriptions in FIG. 14 to FIG. 16. Details are not described herein again. Alternatively, after the electronic device detects the operation of tapping the enhancement processing control 728, the electronic device may automatically perform the method for enhancing video image quality provided in this embodiment of this application.

Optionally, as shown in an interface diagram of FIG. 18, the user may enhance image quality of a video by using the enhancement control in the play display interface, that is, trigger the electronic device to perform the method for enhancing video image quality provided in this embodiment of this application.

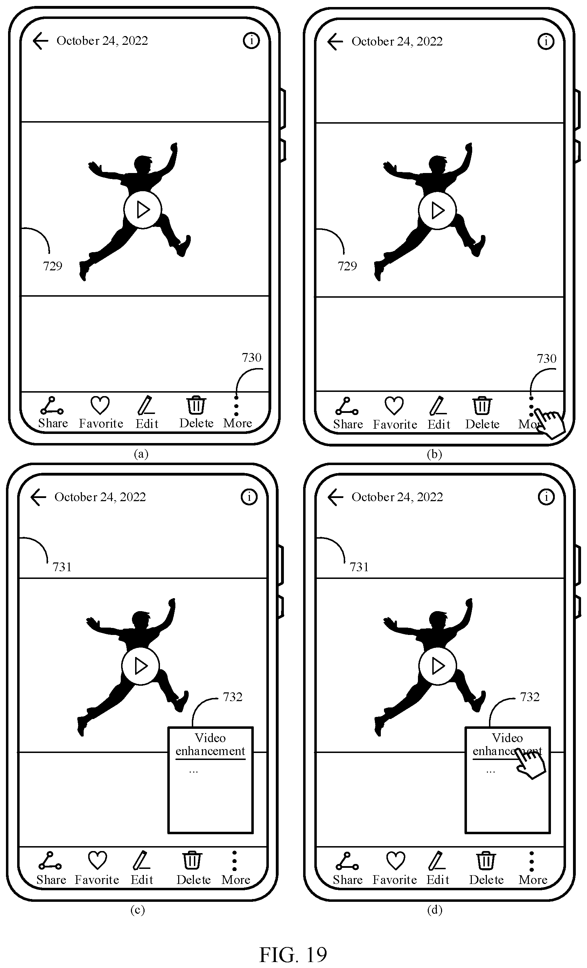

For example, the electronic device detects an operation of tapping an icon of a video in a gallery, and displays a play display interface 729. The play display interface 729 includes more controls 730, as shown in (a) of FIG. 19. The electronic device detects an operation of tapping more controls 730, as shown in (b) of FIG. 19. After detecting the operation of tapping more controls 730, the electronic device displays a display interface 731. The display interface 731 includes a prompt box 732, and the prompt box 732 includes a video enhancement option, as shown in (c) of FIG. 19. The electronic device detects an operation of tapping the video enhancement option in the prompt box 732, as shown in (d) of FIG. 19. Optionally, after the electronic device detects the operation of tapping the enhancement option, the electronic device may display an edit display interface, as shown in (a) of FIG. 14. For a subsequent edit operation on the original video, refer to related descriptions in FIG. 14 to FIG. 16. Details are not described herein again. Alternatively, after the electronic device detects the operation of tapping the enhancement option, the electronic device may automatically perform the method for enhancing video image quality provided in this embodiment of this application.

Optionally, as shown in an interface diagram of FIG. 19, the user may enhance image quality of a video by using the video enhancement option in more controls in the play display interface, that is, trigger the electronic device to perform the method for enhancing video image quality provided in this embodiment of this application.

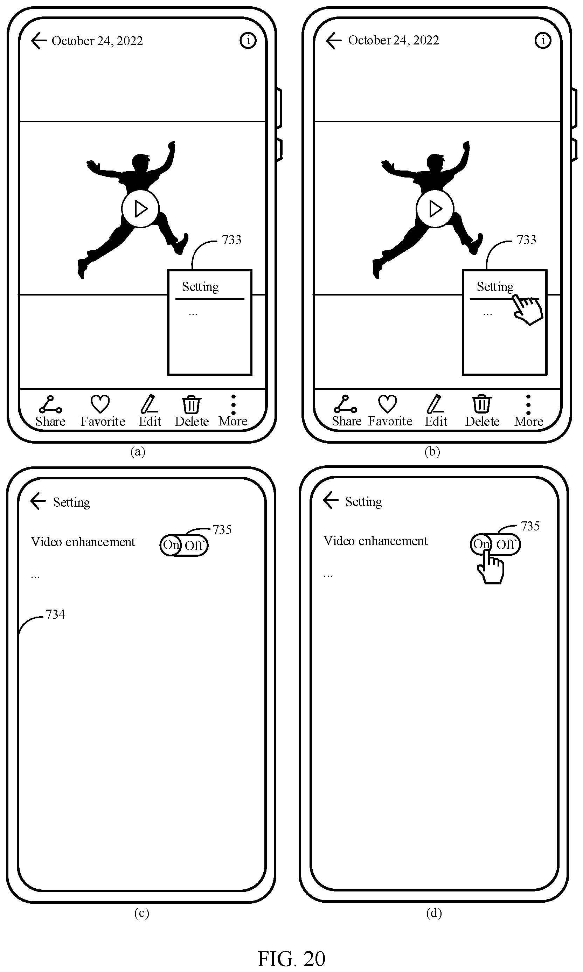

For example, after detecting the operation of tapping more controls, the electronic device displays a prompt box 733. The prompt box 733 includes a setting option, as shown in (a) of FIG. 20. The electronic device detects an operation of tapping the setting option in the prompt box 733, as shown in (b) of FIG. 20. After detecting the operation of tapping the setting option in the prompt box 733, the electronic device displays a setting display interface 734, where the setting display interface includes a video enhancement control 735, as shown in (c) of FIG. 20. The electronic device detects an operation of tapping the video enhancement control 735, as shown in (d) of FIG. 20. Optionally, after the electronic device detects the operation of tapping the video enhancement control 735, the electronic device may display an edit display interface, as shown in (a) of FIG. 14. For a subsequent edit operation on the original video, refer to related descriptions in FIG. 14 to FIG. 16. Details are not described herein again. Alternatively, after the electronic device detects the operation of tapping the video enhancement control 735, the electronic device may automatically perform the method for enhancing video image quality provided in this embodiment of this application.

Optionally, as shown in an interface diagram of FIG. 20, the user may enhance image quality of a video by using the setting control in more controls in the play display interface, that is, trigger the electronic device to perform the method for enhancing video image quality provided in this embodiment of this application.

In this embodiment of this application, before the electronic device plays a video (for example, plays a locally stored video or plays a received video), the electronic device may display prompt information, to prompt whether to perform video enhancement processing.

For example, the electronic device displays a video display interface 736, and the video display interface 736 includes a video icon 737. The electronic device detects an operation of tapping the video icon 737, as shown in (a) of FIG. 21. After detecting the operation of tapping the video icon 737, the electronic device displays a play display interface 738. The play display interface 738 includes a play control 739, as shown in (b) of FIG. 21. The electronic device detects an operation of tapping the play control 739, as shown in (b) of FIG. 21. After the electronic device detects the operation of tapping the play control 739, the electronic device displays a prompt box 740, where the prompt box 740 is used for prompting whether to perform video enhancement. The prompt box 740 includes a yes option 741 or a no option 742, as shown in (d) of FIG. 21. Optionally, if the electronic device detects an operation of tapping the yes option 741, the electronic device performs the method for enhancing video image quality provided in this embodiment of this application, that is, the electronic device plays a video on which video image quality enhancement is performed; and if the electronic device detects an operation of tapping the no option 742, the electronic device plays an original video, that is, an unprocessed video.

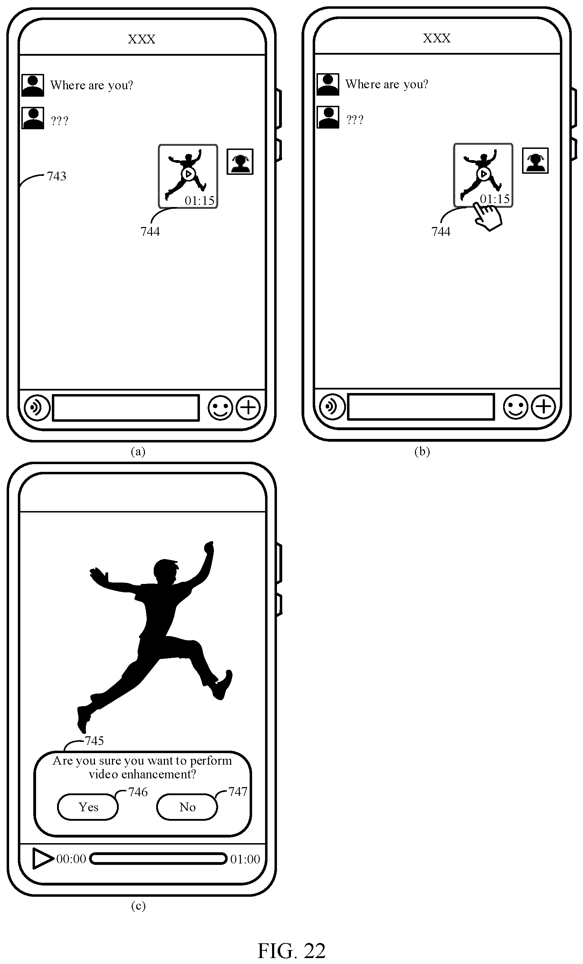

For example, a chat interface 743 includes a video 744, as shown in (a) of FIG. 22. The electronic device detects an operation of tapping a play control in the video 744, as shown in (b) of FIG. 22. After detecting the operation of tapping the play control in the video 744, the electronic device displays a play display interface. The play display interface includes a prompt box 745, and the prompt box 745 is used for prompting whether to perform video enhancement. The prompt box 745 includes a yes option 746 and a no option 747, as shown in (c) of FIG. 22. Optionally, if the electronic device detects an operation of tapping the yes option 745, the electronic device performs the method for enhancing video image quality provided in this embodiment of this application, that is, the electronic device plays a video on which video image quality enhancement is performed; and if the electronic device detects an operation of tapping the no option 747, the electronic device plays an original video, that is, an unprocessed video.

In this embodiment of this application, before image quality enhancement processing is performed on the to-be-played video, the to-be-played video may be analyzed first, to determine a factor that affects the video quality of the to-be-played video. When the factor that affects the video quality of the to-be-played video is determined, image quality enhancement processing is performed on the to-be-played video in a targeted manner, to improve the video quality of the to-be-played video. Compared with an existing manner in which enhancement processing is directly performed on one aspect of the to-be-played video, the solution in this embodiment of this application can intelligently analyze a reason why the video quality of the to-be-played video is poor, to perform image quality enhancement processing on the to-be-played video in a targeted manner, thereby improving the video quality of the to-be-played video.

It should be understood that the foregoing descriptions by using examples are intended to help a person skilled in the art understand the embodiments of this application, but are not intended to limit the embodiments of this application to specific values or specific scenarios illustrated. Apparently, a person skilled in the art can make various equivalent modifications or changes based on the foregoing descriptions of the examples, and such modifications or changes also fall within the scope of the embodiments of this application.

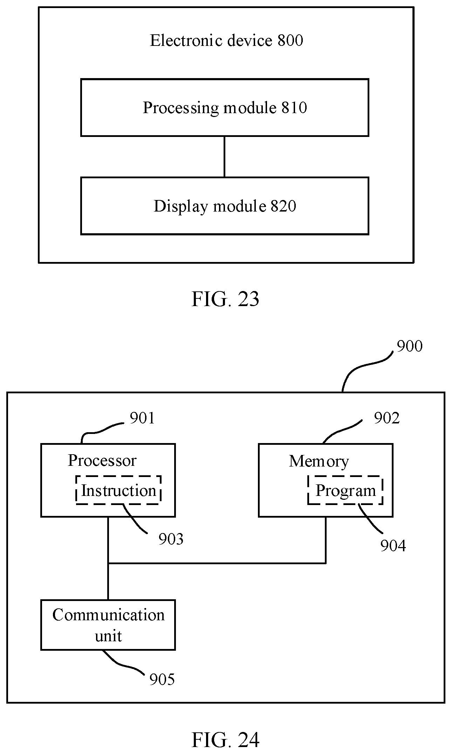

The foregoing describes the method for enhancing video image quality provided in the embodiments of this application in detail with reference to FIG. 1 to FIG. 22. Apparatus embodiments of this application will be described in detail with reference to FIG. 23 to FIG. 24. It should be understood that the apparatus in this embodiment of this application may perform the methods in the foregoing embodiments of this application. That is, for specific working processes of the following products, refer to corresponding processes in the foregoing method embodiments.

FIG. 23 is a schematic diagram of a structure of an electronic device according to an embodiment of this application. The electronic device 800 includes a processing module 810 and a display module 820.

The processing module 810 is configured to obtain a to-be-played video. The display module 820 is configured to display a first display interface, where the first display interface includes the to-be-played video; the processing module 810 is further configured to: detect a play operation on the to-be-played video; determine, in response to the play operation, whether a first parameter of the to-be-played video is less than a first preset threshold, where the first parameter includes a resolution; determine, if the first parameter is less than the first preset threshold, whether a second parameter of the to-be-played video satisfies a first preset condition, where the second parameter includes a value of a dynamic range and a value of high-frequency information, the first preset condition includes that the value of the dynamic range of the to-be-played video is less than a second preset threshold, and/or the value of the high-frequency information of the to-be-played video is than a third preset threshold, the value of the high-frequency information is an accumulated value of high-frequency information in a frequency domain diagram of the to-be-played video, and the high-frequency information includes edge information and detail information of an image in the to-be-played video; perform enhancement processing on the to-be-played video based on the first parameter and/or the second parameter, to generate an enhanced video; and display or save the enhanced video.

Optionally, as an embodiment, the processing module 810 is specifically configured to:
perform the enhancement processing on luminance path data of the to-be-played video based on the first parameter and/or the second parameter, to generate the enhanced video.

Optionally, as an embodiment, the processing module 810 is specifically configured to:
obtain a classification tag of the to-be-played video;
determine whether the classification tag belongs to a preset tag, where the preset tag includes a first tag and a second tag; and
if the classification tag belongs to the first tag, determine whether the value of the dynamic range of the to-be-played video is less than the second preset threshold, where the value of the dynamic range is obtained based on a ratio of a quantity of pixels in a first grayscale interval in a histogram of the to-be-played video; and
the performing enhancement processing on the to-be-played video based on the first parameter and/or the second parameter, to generate an enhanced video includes:
   if the value of the dynamic range is less than the second preset threshold, performing enhancement processing on the to-be-played video based on the value of the dynamic range, to generate the enhanced video.

Optionally, as an embodiment, the processing module 810 is specifically configured to:
determine whether the ratio of the quantity of pixels in the first grayscale interval in the histogram of the to-be-played video is greater than a fourth preset threshold.

Optionally, as an embodiment, the processing module 810 is specifically configured to:
obtain the ratio of the quantity of pixels in the first grayscale interval;
obtain a first value and a second value based on the ratio of the quantity of pixels in the first grayscale interval;
obtain a mapping relationship based on the first value, the second data, and preset coordinate data, where the mapping relationship indicates an association relationship between an input grayscale value and an output grayscale value; and
perform the enhancement processing on the to-be-played video based on the mapping relationship, to generate the enhanced video.

Optionally, as an embodiment, the processing module 810 is specifically configured to:
perform the enhancement processing on a luminance path of the to-be-played video based on the mapping relationship, to generate the enhanced video.

Optionally, as an embodiment, the mapping relationship is a mapping curve, and the ratio of the quantity of pixels in the first grayscale interval is directly proportional to a curvature of the mapping curve.

Optionally, as an embodiment, the processing module 810 is further configured to:
if the classification tag belongs to the second tag, determine whether the value of the high-frequency information of the to-be-played video is less than the third preset threshold; and
the performing enhancement processing on the to-be-played video based on the first parameter and/or the second parameter, to generate an enhanced video includes:
if a ratio of the high-frequency information is less than the third preset threshold, performing enhancement processing on the to-be-played video based on the value of the high-frequency information, to generate the enhanced video.

Optionally, as an embodiment, the processing module 810 is specifically configured to:
perform Fourier transform processing on the luminance path data of the to-be-played video, to generate a frequency diagram of the to-be-played video;
determine an accumulated value of a high-frequency area in the frequency diagram based on the frequency diagram, where the accumulated value of the high-frequency area is a value obtained by traversing each pixel of the high-frequency area;
obtain a Laplace sharpening coefficient based on the accumulated value of the high-frequency area, a preset slope value, and a preset intercept value;
obtain a first video based on the Laplace sharpening coefficient and a second-order gradient image of the to-be-played video; and
perform fusion processing on the to-be-played video and the first video, to generate the enhanced video.

Optionally, as an embodiment, the processing module 810 is specifically configured to:
determine whether the first parameter of each frame of data in the to-be-played video is less than the first preset threshold.

Optionally, as an embodiment, the processing module 810 is specifically configured to:
determine whether the first parameter of preset frame data in the to-be-played video is less than the first preset threshold.

Optionally, as an embodiment, the processing module 810 is specifically configured to:
determine whether the second parameter of each frame of data in the to-be-played video satisfies the first preset condition.

Optionally, as an embodiment, the processing module 810 is specifically configured to:
determine whether the second parameter of the preset frame data in the to-be-played video satisfies the first preset condition.

Optionally, as an embodiment, the detecting a play operation on the to-be-played video includes:
displaying a second display interface, where the second display interface includes a first prompt box, the first prompt box is used to prompt whether to perform the enhancement processing on the to-be-played video, the first prompt box includes a first control, and the first control is used to indicate to perform the enhancement processing on the to-be-played video; and
the determining, in response to the play operation, whether a first parameter of the to-be-played video is less than a first preset threshold includes:
   detecting a first operation on the first control; and
   determining, in response to the first operation, whether the first parameter of the to-be-played video is less than the first preset threshold.

Optionally, as an embodiment, when the enhanced video is saved, the processing module 810 is further configured to:
display a second prompt box, where the second prompt box is used to prompt a storage mode of the enhanced video, where
the storage mode includes: a first storage mode and a second storage mode, the first storage mode is a storage mode of replacing the to-be-played video with the enhanced video, the second storage mode is storing the enhanced video into a first storage area, and the first storage area is different from a storage area for storing the to-be-played video.

Optionally, as an embodiment, the processing module 810 is specifically configured to:
obtain the to-be-played video in the electronic device; or
receive the to-be-played video sent by a first electronic device, where the first electronic device is a capture device of the to-be-played video.

It should be noted that, the electronic device 800 is represented in a form of a functional module. The term "module" herein may be implemented in the form of software and/or hardware. This is not specifically limited.

For example, the "module" may be a software program, a hardware circuit, or a combination of the two that implement the above functions. The hardware circuit may include an application specific integrated circuit (application specific integrated circuit, ASIC), an electronic circuit, a processor (for example, a shared processor, a dedicated processor, or a packet processor) configured to execute one or more software or firmware programs, a memory, a combined logical circuit, and/or another suitable component that supports the described functions.

Therefore, units of various examples described in the embodiments of this application may be realized by electronic hardware, or a combination of computer software and the electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

FIG. 24 is a schematic diagram of a structure of an electronic device according to this application. A dashed line in FIG. 24 indicates that the unit or the module is optional. The electronic device 900 may be configured to implement the method described in the foregoing embodiments.

The electronic device 900 includes one or more processors 901, and the one or more processors 901 may support the electronic device 900 in implementing the method for enhancing video image quality in the method embodiments. The processor 901 may be a general-purpose processor or a dedicated processor. For example, the processor 901 may be a central processing unit (central processing unit, CPU), a digital signal processor (digital signal processor, DSP), an application specific integrated circuit (application specific integrated circuit, ASIC), a field programmable gate array (field programmable gate array, FPGA), or another programmable logic device, such as a discrete gate, a transistor logic device, or a discrete hardware component.

The processor 901 may be configured to: control the electronic device 900, execute a software program, and process data of the software program. The electronic device 900 may further include a communication unit 905, configured to input (receive) and output (send) a signal.

For example, the electronic device 900 may be a chip, the communication unit 905 may be an input and/or output circuit of the chip, or the communication unit 905 may be a communication interface of the chip, and the chip may be used as a component of a terminal device or another electronic device.

For another example, the electronic device 900 may be a terminal device, the communication unit 905 may be a transceiver of the terminal device, or the communication unit 905 may be a transceiver circuit of the terminal device.

The electronic device 900 may include one or more memories 902 storing a program 904. The program 904 may be executed by the processor 901 to generate an instruction 903, so that the processor 901 performs, based on the instruction 903, the method for enhancing video image quality described in the foregoing method embodiments.

Optionally, the memory 902 may further store data.

Optionally, the processor 901 may further read data stored in the memory 902. The data may be stored at a storage address same as that the program 904, or the data may be stored at a storage address different from that of the program 904.

The processor 901 and the memory 902 may be separately disposed, or may be integrated together, for example, integrated on a system on chip (system on chip, SOC) of a terminal device.

For example, the memory 902 may be configured to store a program 904 related to the method for enhancing video image quality provided in the embodiments of this application. The processor 901 may be configured to invoke, when performing the method for enhancing video image quality, the program 904 related to the method for enhancing video image quality stored in the memory 902, to perform the method for enhancing video image quality provided in the embodiments of this application. For example, obtaining a to-be-played video; displaying a first display interface, where the first display interface includes the to-be-played video; detecting a play operation on the to-be-played video; determining, in response to the play operation, whether a first parameter of the to-be-played video is less than a first preset threshold, where the first parameter includes a resolution; determining, if the first parameter is less than the first preset threshold, whether a second parameter of the to-be-played video satisfies a first preset condition, where the second parameter includes a value of a dynamic range and a value of high-frequency information, the first preset condition includes that the value of the dynamic range of the to-be-played video is less than a second preset threshold, and/or the value of the high-frequency information of the to-be-played video is than a third preset threshold, the value of the high-frequency information is an accumulated value of high-frequency information in a frequency domain diagram of the to-be-played video, and the high-frequency information includes edge information and detail information of an image in the to-be-played video; performing enhancement processing on the to-be-played video based on the first parameter and/or the second parameter, to generate an enhanced video; and displaying or saving the enhanced video.

This application further provides a computer program product, and when the computer program product is executed by the processor 901, the method for enhancing video image quality according to any one of the method embodiments in this application is implemented.

The computer program product may be stored in the memory 902, for example, a program 904. The program 904, through processing such as preprocessing, compiling, assembly, and linking, is finally converted into an executable target file that can be executed by the processor 901.

This application further provides a computer-readable storage medium storing a computer program. When the computer program is executed by a computer, the method for enhancing video image quality according to any one of the method embodiments in this application is implemented. The computer program may be a high-level language program, or may be an executable target program.

The computer-readable storage medium is, for example, the memory 902. The memory 902 may be a volatile memory or a non-volatile memory, or the memory 902 may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that the exemplary units and algorithm operations described with reference to embodiments disclosed in this specification can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

A person skilled in the art may clearly understand that, for simple and clear description, for specific work processes of the foregoing described system, apparatus, and unit, refer to corresponding process in the foregoing method embodiments, and details are not described herein again.

In the several embodiments provided in this application, the disclosed system, apparatus, and method may be implemented in other manners. For example, the electronic device embodiments described above are merely examples. For example, division into the modules is merely a logical function division and there may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The term "and/or" used in this specification describes only an association relationship for describing associated objects and represents that three relationships may exist. For example, A and/or B may represent the following three cases: only A exists, both A and B exist, and only B exists. In addition, the character "/" in this specification generally indicates an "or" relationship between the associated objects.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. In summary, the foregoing descriptions are merely preferred embodiments in the technical solution of this application and are not intended to limit the protection scope of this application. Any modification, equivalent replacement, or improvement made without departing from the spirit and principle of this application shall fall within the protection scope of this application.

## Claims

1. A method for enhancing video image quality, applied to an electronic device for playing a video, and comprising:
obtaining a to-be-played video;
displaying a first display interface, wherein the first display interface comprises the to-be-played video;
detecting a play operation on the to-be-played video;
determining, in response to the play operation, whether a first parameter of the to-be-played video is less than a first preset threshold, wherein the first parameter comprises a resolution;
determining, if the first parameter is less than the first preset threshold, whether a second parameter of the to-be-played video satisfies a first preset condition, wherein the second parameter comprises a value of a dynamic range and a value of high-frequency information, the first preset condition comprises that the value of the dynamic range of the to-be-played video is less than a second preset threshold, and/or the value of the high-frequency information of the to-be-played video is than a third preset threshold, the value of the high-frequency information is an accumulated value of high-frequency information in a frequency domain diagram of the to-be-played video, and the high-frequency information comprises edge information and detail information of an image in the to-be-played video;
performing enhancement processing on the to-be-played video based on the first parameter and/or the second parameter, to generate an enhanced video; and
displaying or saving the enhanced video.

2. The method according to claim 1, wherein the performing enhancement processing on the to-be-played video based on the first parameter and/or the second parameter, to generate an enhanced video comprises:
performing the enhancement processing on luminance path data of the to-be-played video based on the first parameter and/or the second parameter, to generate the enhanced video.

3. The method according to claim 1 or 2, wherein the determining, if the first parameter is less than the first preset threshold, whether a second parameter of the to-be-played video satisfies a first preset condition comprises:
obtaining a classification tag of the to-be-played video;
determining whether the classification tag belongs to a preset tag, wherein the preset tag comprises a first tag and a second tag; and
if the classification tag belongs to the first tag, determining whether the value of the dynamic range of the to-be-played video is less than the second preset threshold, wherein the value of the dynamic range is obtained based on a ratio of a quantity of pixels in a first grayscale interval in a histogram of the to-be-played video; and
the performing enhancement processing on the to-be-played video based on the first parameter and/or the second parameter, to generate an enhanced video comprises:
if the value of the dynamic range is less than the second preset threshold, performing enhancement processing on the to-be-played video based on the value of the dynamic range, to generate the enhanced video.

4. The method according to claim 3, wherein the determining whether the value of the dynamic range of the to-be-played video is less than the second preset threshold comprises:
determining whether the ratio of the quantity of pixels in the first grayscale interval in the histogram of the to-be-played video is greater than a fourth preset threshold.

5. The method according to claim 3 or 4, wherein the performing enhancement processing on the to-be-played video based on the value of the dynamic range, to generate the enhanced video comprises:
obtaining the ratio of the quantity of pixels in the first grayscale interval;
obtaining a first value and a second value based on the ratio of the quantity of pixels in the first grayscale interval;
obtaining a mapping relationship based on the first value, the second data, and preset coordinate data, wherein the mapping relationship indicates an association relationship between an input grayscale value and an output grayscale value; and
performing the enhancement processing on the to-be-played video based on the mapping relationship, to generate the enhanced video.

6. The method according to claim 5, wherein the performing the enhancement processing on the to-be-played video based on the mapping relationship, to generate the enhanced video comprises:
performing the enhancement processing on a luminance path of the to-be-played video based on the mapping relationship, to generate the enhanced video.

7. The method according to claim 5 or 6, wherein the mapping relationship is a mapping curve, and the ratio of the quantity of pixels in the first grayscale interval is directly proportional to a curvature of the mapping curve.

8. The method according to any one of claims 3 to 6, further comprising:
if the classification tag belongs to the second tag, determining whether the value of the high-frequency information of the to-be-played video is less than the third preset threshold; and
the performing enhancement processing on the to-be-played video based on the first parameter and/or the second parameter, to generate an enhanced video comprises:
if a ratio of the high-frequency information is less than the third preset threshold, performing enhancement processing on the to-be-played video based on the value of the high-frequency information, to generate the enhanced video.

9. The method according to claim 7, wherein the performing enhancement processing on the to-be-played video based on the value of the high-frequency information, to generate the enhanced video comprises:
performing Fourier transform processing on the luminance path data of the to-be-played video, to generate a frequency diagram of the to-be-played video;
determining an accumulated value of a high-frequency area in the frequency diagram based on the frequency diagram, wherein the accumulated value of the high-frequency area is a value obtained by traversing each pixel of the high-frequency area;
obtaining a Laplace sharpening coefficient based on the accumulated value of the high-frequency area, a preset slope value, and a preset intercept value;
obtaining a first video based on the Laplace sharpening coefficient and a second-order gradient image of the to-be-played video; and
performing fusion processing on the to-be-played video and the first video, to generate the enhanced video.

10. The method according to any one of claims 1 to 9, wherein the determining whether a first parameter of the to-be-played video is less than a first preset threshold comprises:
determining whether the first parameter of each frame of data in the to-be-played video is less than the first preset threshold.

11. The method according to any one of claims 1 to 9, wherein the determining whether a first parameter of the to-be-played video is less than a first preset threshold comprises:
determining whether the first parameter of preset frame data in the to-be-played video is less than the first preset threshold.

12. The method according to any one of claims 1 to 11, wherein the determining whether a second parameter of the to-be-played video satisfies a first preset condition comprises:
determining whether the second parameter of each frame of data in the to-be-played video satisfies the first preset condition.

13. The method according to any one of claims 1 to 11, wherein the determining whether a second parameter of the to-be-played video satisfies a first preset condition comprises:
determining whether the second parameter of the preset frame data in the to-be-played video satisfies the first preset condition.

14. The method according to any one of claims 1 to 13, wherein the detecting a play operation on the to-be-played video comprises:
displaying a second display interface, wherein the second display interface comprises a first prompt box, the first prompt box is used to prompt whether to perform the enhancement processing on the to-be-played video, the first prompt box comprises a first control, and the first control is used to indicate to perform the enhancement processing on the to-be-played video; and
the determining, in response to the play operation, whether a first parameter of the to-be-played video is less than a first preset threshold comprises:
detecting a first operation on the first control; and
determining, in response to the first operation, whether the first parameter of the to-be-played video is less than the first preset threshold.

15. The method according to any one of claims 1 to 14, when the enhanced video is saved, further comprising:
displaying a second prompt box, wherein the second prompt box is used to prompt a storage mode of the enhanced video, wherein
the storage mode comprises: a first storage mode and a second storage mode, the first storage mode is a storage mode of replacing the to-be-played video with the enhanced video, the second storage mode is storing the enhanced video into a first storage area, and the first storage area is different from a storage area for storing the to-be-played video.

16. The method according to any one of claims 1 to 15, wherein the obtaining a to-be-played video comprises:
obtaining the to-be-played video in the electronic device; or
receiving the to-be-played video sent by a first electronic device, wherein the first electronic device is a capture device of the to-be-played video.

17. An electronic device, comprising:
one or more processors and a memory, wherein
the memory is coupled to the one or more processors, the memory is configured to store computer program code, the computer program code comprises a computer instruction, and the one or more processors invoke the computer instruction to enable the electronic device to perform the method according to any one of claims 1 to 16.

18. A chip system, wherein the chip system is applied to an electronic device, the chip system comprises one or more processors, and the processor is configured to invoke a computer instruction to enable the electronic device to perform the method according to any one of claims 1 to 16.

19. A computer-readable storage medium, wherein the computer-readable storage medium stores a computer program, and when the computer program is executed by a computer, the computer is enabled to perform the method according to any one of claims 1 to 16.

20. A computer program product, wherein the computer program product comprises computer program code, and when the computer program code is run by an electronic device, the electronic device is enabled to perform the method according to any one of claims 1 to 16.
